(19) Europäisches Patentamt
European Patent Office
Office européen des brevets

(11) **EP 4 716 334 A1**

(12) **EUROPEAN PATENT APPLICATION**
published in accordance with Art. 153(4) EPC

(43) Date of publication:
**25.03.2026 Bulletin 2026/13**

(21) Application number: **23937856.5**

(22) Date of filing: **19.05.2023**

(51) International Patent Classification (IPC):
*H04W 72/0446* (2023.01)

(52) Cooperative Patent Classification (CPC):
**H04L 5/00; H04W 72/0446; H04W 72/0453;
H04W 72/20**

(86) International application number:
**PCT/CN2023/095401**

(87) International publication number:
**WO 2024/239177 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **ZHAO, Qun**
**Beijing 100085 (CN)**

(74) Representative: **Dehns Germany Partnerschaft
mbB**
**Theresienstraße 6-8**
**80333 München (DE)**

(54) **INFORMATION PROCESSING METHOD AND APPARATUS, AND COMMUNICATION DEVICE,
COMMUNICATION SYSTEM AND STORAGE MEDIUM**

(57) The present disclosure relates to an information processing method and apparatus, and a communication device, a communication system and a storage medium. The method may be executed by a first device. The method comprises: receiving a first reference signal, wherein the first reference signal occupies at least two resource elements; and sending first information to a network device, wherein the first information comprises at least one first coefficient, each first coefficient corresponds to a frequency-domain label, and the frequency-domain label is used for indicating the frequency-domain distance between a pair of resource elements. Resource overheads for wireless sensing and channel state determination can be effectively reduced.

```
┌─────────────────────────────────────────────┐
│   S3301, acquire a first reference signal     │
└─────────────────────────────────────────────┘
                      │
                      ▼
┌─────────────────────────────────────────────┐
│      S3302, transmit first information         │
└─────────────────────────────────────────────┘
```

FIG. 3c

**Description**

**TECHNICAL FIELD**

The present invention relates to the field of communication technologies, and in particular to an information processing method and apparatus, a communication device, a communication system, and a storage medium.

**BACKGROUND**

Wireless communication technologies and wireless sensing technologies are highly similar. Integrated sensing and communication (ISAC) may combine wireless communication and wireless sensing, which introduces close cooperation between the two, thereby improving spectrum efficiency and reducing network deployment costs. In the wireless sensing, it is usually required to estimate a distance to a sensing object, as well as its azimuth (such as horizontal and vertical angles) and speed. The broader sensing also includes a wireless tracking of the sensing object and a radio frequency identification of the sensing object.

**SUMMARY**

Examples of the present invention provide an information processing method and apparatus, a communication device, a communication system, and a storage medium.

According to a first aspect of the examples of the present invention, an information processing method is provided, which is performed by a first device. The method includes: receiving a first reference signal that occupies at least two resource elements; and transmitting first information to a network device, wherein the first information includes at least one first coefficient, each first coefficient corresponds to one frequency domain tag (FDT), and the FDT indicates a frequency domain distance between a pair of resource elements.

According to a second aspect of the examples of the present invention, an information processing method is provided, which is performed by a network device. The method includes: receiving first information transmitted by a first device, wherein the first information includes at least one first coefficient, each first coefficient corresponds to one FDT, and the FDT indicates a frequency domain distance between a pair of resource elements, and wherein the first information is determined by the first device through receiving a first reference signal, and the first reference signal occupies at least two resource elements.

According to a third aspect of the examples of the present invention, an information processing method is provided, which is applicable to a communication system that includes a

first device and a network device. The method includes: receiving, by the first device, a first reference signal that occupies at least two resource elements; and transmitting, by the first device, first information to the network device, wherein the first information includes at least one first coefficient, each first coefficient corresponds to one FDT, and the FDT indicates a frequency domain distance between a pair of resource elements.

According to a fourth aspect of the examples of the present invention, a first information processing apparatus is provided. The apparatus includes: a receiving module, configured to receive a first reference signal that occupies at least two resource elements; and a transmitting module, configured to transmit first information to a network device, wherein the first information includes at least one first coefficient, each first coefficient corresponds to one FDT, and the FDT indicates a frequency domain distance between a pair of resource elements.

According to a fifth aspect of the examples of the present invention, a second information processing apparatus is provided. The apparatus includes: a receiving module, configured to receive first information transmitted by a first device, wherein the first information includes at least one first coefficient, each first coefficient corresponds to one FDT, and the FDT indicates a frequency domain distance between a pair of resource elements, and wherein the first information is determined by the first device through receiving a first reference signal, and the first reference signal occupies at least two resource elements.

According to a sixth aspect of the examples of the present invention, a communication device is provided, including: one or more processors; wherein the one or more processors are configured to call computer instructions to cause the communication device to perform the information processing method described in the first aspect or the second aspect of the present invention.

According to a seventh aspect of the examples of the present invention, a storage medium having instructions stored is provided. The instructions, when executed on a communication device, cause the communication device to perform the information processing method described in the first aspect or the second aspect of the present invention.

It can achieve that resource overheads for wireless sensing and channel state determination are effectively reduced.

# EP 4 716 334 A1

## BRIEF DESCRIPTION OF THE DRAWINGS

The drawings required for the description of examples are introduced below to explain the technical solutions provided in the examples of the present invention more clearly. The following drawings are merely some examples of the present invention, which do not impose any specific limitations on the protection scope of the present invention.

FIG. 1 is a schematic diagram illustrating an architecture of a communication system according to an example of the present invention.

FIG. 2a is a schematic diagram illustrating interactions of an information processing method according to an example of the present invention.

FIG. 2b is a schematic diagram illustrating resource occupancy of a first reference signal according to an example of the present invention.

FIG. 3a is a schematic flowchart illustrating an information processing method according to an example of the present invention.

FIG. 3b is a schematic flowchart illustrating an information processing method according to an example of the present invention.

FIG. 3c is a schematic flowchart illustrating an information processing method according to an example of the present invention.

FIG. 4a is a schematic flowchart illustrating an information processing method according to an example of the present invention.

FIG. 4b is a schematic flowchart illustrating an information processing method according to an example of the present invention.

FIG. 4c is a schematic flowchart illustrating an information processing method according to an example of the present invention.

FIG. 4d is a schematic flowchart illustrating an information processing method according to an example of the present invention.

FIG. 4e is a schematic flowchart illustrating an information processing method according to an example of the present invention.

FIG. 5 is a schematic diagram illustrating interactions of an information processing method according to an example of the present invention.

FIG. 6 is a schematic flowchart illustrating an information processing method according to an example of the present invention.

FIG. 7a is a schematic diagram of a structure of a first information processing apparatus provided according to an example of the present invention.

FIG. 7b is a schematic diagram of a structure of a second information processing apparatus provided according to an example of the present invention.

FIG. 8a is a schematic diagram of a structure of a communication device provided according to an example of the present invention.

FIG. 8b is a schematic diagram of a structure of a chip according to an example of the present invention.

## DETAILED DESCRIPTION OF THE EMBODIMENTS

Resource overheads incurred when a receiver directly reports received raw reference signals to a network would be substantial, rendering it unsuitable for wireless sensing and wireless communication.

Examples of the present invention provide an information processing method and apparatus, and a storage medium.

In a first aspect, an example of the present invention provides an information processing method, which is performed by a first device. The method includes: receiving a first reference signal that occupies at least two resource elements (REs); and transmitting first information to a network device, where the first information includes at least one first coefficient, each first coefficient corresponds to one frequency domain tag (FDT), and the FDT indicates a frequency domain distance between a pair of resource elements.

In the example, it can effectively report the information used for wireless sensing or for downlink channel state determination by transmitting one or more first coefficients of one or more FDTs by the receiver, which can effectively reduce spectrum resource occupancy in a case that the first reference signal is distributed on a plurality of resource elements because the received raw signals are not required to be transmitted.

In combination with some examples of the first aspect, in some examples, the first information is used by the network device to determine sensing metrics or to determine state information of a downlink channel.

In the examples, the first information may be used by the network device to determine the sensing metrics, and may also be used to determine the information of the downlink channel, effectively reducing resource overheads for the wireless sensing and the channel state determination.

In combination with some examples of the first aspect, in some examples, the first reference signal is a channel state information reference signal (CSI-RS), and the first information is channel state information (CSI); alternatively, the first reference signal is a sensing reference signal, and the first information is sensing information.

In the examples, the first device may receive the CSI-RS and obtain the CSI based on the CSI-RS, which may enable the network device to determine the state information of the downlink channel according to the CSI. Alternatively, the first device may receive the sensing reference signal, obtain the sensing information based on the sensing reference signal and transmit it to the network device, which may enable the network device to determine the sensing metrics according to the sensing information.

In combination with some examples of the first aspect, in some examples, the pair of resource elements indicated by the FDT are resource elements on one orthogonal frequency division multiplexing (OFDM) symbol.

In the examples, the two resource elements of the resource element pair corresponding to each FDT may be resource elements distributed on the same OFDM symbol, so as to effectively ensure that two resource elements on different OFDM symbols are not covered by the corresponding FDT, which can ensure that the first coefficient corresponding to each FDT is more accurate, thereby ensuring the accuracy of the wireless sensing and the channel state determination.

In combination with some examples of the first aspect, in some examples, the at least two resource elements are distributed on at least two subcarriers, one or more FDTs corresponding to the at least one first coefficient constitute a first FDT set, the first FDT set is a subset of a second FDT set, and the second FDT is determined based on a set of subcarrier positions of all resource elements occupied by the first reference signal.

In the examples, the FDT set may be determined based on the set of the subcarrier positions of the resource elements, and the first information includes the one or more first coefficients corresponding to some or all of the FDTs in the second FDT set, which can ensure the integrity of the first information reported by the first device for the sensing, thereby further improving the accuracy of the wireless sensing and the channel state determination.

In combination with some examples of the first aspect, in some examples, the first FDT set includes all the FDTs in the second FDT set; or the first FDT set includes the smallest N FDTs in the second FDT set; or the first FDT set includes the FDTs in the second FDT set corresponding to a longest arithmetic sequence. N is a positive integer.

In the examples, the first FDT set may include all the FDTs in the second FDT set, the smallest N FDTs in the second FDT set, or the FDTs in the second FDT set corresponding to the longest arithmetic sequence, so that the first device may report the first coefficients corresponding to all or part of the FDTs, thereby ensuring the accuracy of the wireless sensing or the channel state determination while further reducing the resource overheads.

In combination with some examples of the first aspect, in some examples, the at least two resource elements are distributed on at least two subcarriers, and the FDT is determined according to counts of the subcarriers between the pair of resource elements.

In the examples, the FDT is determined according to the counts of the subcarriers between the resource elements, so that the FDT can effectively and conveniently indicate the frequency domain distance between the pair of resource elements.

In combination with some examples of the first aspect, in some examples, the at least one first coefficient is arranged in a first order.

In the examples, the first coefficients corresponding to various FDTs in the first information are arranged in a specific order and then reported to the network device, thereby effectively avoiding the reduced accuracy of the wireless sensing and the channel state determination due to a sequence confusion.

In combination with some examples of the first aspect, in some examples, the network device includes at least one of the following: a location management function (LMF) network element, a sensing management function (SMF) network element, or a base station.

In the examples, by transmitting the first information to the LMF network element, the SMF network element or the base station, the LMF network element and/or the SMF network element can determine the sensing metrics according to the first information, and the base station can also determine the state information of the downlink channel according to the first information.

In combination with some examples of the first aspect, in some examples, the method includes: determining at least one first coefficient sample corresponding to a first FDT; and determining the first coefficient corresponding to the first FDT based on the at least one first coefficient sample.

In the examples, the first coefficient corresponding to each FDT can be accurately obtained using the first coefficient samples of the FDT, thereby ensuring the accuracy of the wireless sensing and the channel state determination.

In combination with some examples of the first aspect, in some examples, determining at least one first coefficient sample corresponding to the first FDT includes: determining the first coefficient samples corresponding to a first resource element pair based on channel frequency responses (CFRs) of two resource elements in the first resource element pair, where the first resource element pair is any pair of resource elements corresponding to the first FDT.

In the examples, the first coefficient samples corresponding to each resource element pair can be accurately obtained using the channel frequency responses of the two resource elements in the resource element pair corresponding to each FDT, further ensuring the accuracy of the wireless sensing and the channel state determination.

In combination with some examples of the first aspect, in some examples, one or more resource element pairs corresponding to the first FDT include at least one of the following: a resource element pair consisting of two resource elements distributed on different subcarriers; at least two resource element pairs used by different transmit-receive antenna pairs; at least two resource element pairs used by different transmit-receive antenna port pairs; or at least two resource element pairs distributed on different OFDM symbols.

In the examples, the first coefficient corresponding to the first FDT under different types of channel frequency responses of the resource element pairs can be determined and used as the first coefficient samples, which can ensure the comprehensiveness of the first coefficient samples, and thus make the first coefficient determined based on the first coefficient samples more accurate, thereby effectively ensuring the reliability of the wireless sensing and the wireless communication.

In combination with some examples of the first aspect, in some examples, the method includes: determining a second coefficient among the at least one first coefficient to be updated, and transmitting second information to the network device, where the second information includes the updated second coefficient.

In the examples, the updated coefficient may be reported in time upon the first coefficient corresponding to any FDT changes, which enables the network device to update the sensing metrics in time, effectively ensuring the real-time and the accuracy of the wireless sensing and the channel state determination. Furthermore, only updated coefficients may be reported, which further saves the resource overheads.

In a second aspect, an example of the present invention provides a wireless sensing method, performed by a network device. The method includes: receiving first information transmitted by a first device, where the first information includes at least one first coefficient, each first coefficient corresponds to one FDT, and the FDT indicates a frequency domain distance between a pair of resource elements, and where the first information is determined by the first device through receiving a first reference signal, and the first reference signal occupies at least two resource elements.

In combination with some examples of the second aspect, in some examples, the method includes: determining sensing metrics according to the first information, or determining state information of a downlink channel according to the first information.

In combination with some examples of the second aspect, in some examples, the first reference signal is a CSI-RS, and the first information is CSI; or the first reference signal is a sensing reference signal, and the first information is sensing information.

In combination with some examples of the second aspect, in some examples, the pair of resource elements indicated by the FDT are resource elements on the same OFDM symbol.

In combination with some examples of the second aspect, in some examples, the at least two resource elements are distributed on at least two subcarriers, one or more FDTs corresponding to the at least one first coefficient constitute a first FDT set, the first FDT set is a subset of a second FDT set, and the second FDT is determined based on a set of subcarrier positions of all resource elements occupied by the first reference signal.

In combination with some examples of the second aspect, in some examples, the first FDT set includes all the FDTs in the second FDT set; or the first FDT set includes the smallest N FDTs in the second FDT set; or the first FDT set includes the FDTs in the second FDT set corresponding to a longest arithmetic sequence. N is a positive integer.

In combination with some examples of the second aspect, in some examples, the at least two resource elements are distributed on at least two subcarriers, and the FDT is determined according to counts of the subcarriers between the pair of resource elements.

In combination with some examples of the second aspect, in some examples, the at least one first coefficient is arranged in a first order.

In combination with some examples of the second aspect, in some examples, the network device includes at least one of the following: a LMF network element, a SMF network element, or a base station.

In combination with some examples of the second aspect, in some examples, determining the sensing metrics according to the first information includes: constructing a first matrix according to one or more first coefficients corresponding to the at least one FDT; and determining the sensing metrics according to the first matrix.

In the examples, the first matrix is constructed using the first coefficients included in the first information, and the sensing metrics are determined according to the first matrix, which can reliably achieve the estimation of the sensing metrics, thereby effectively ensuring the accuracy of the sensing metrics.

In combination with some examples of the second aspect, in some examples, determining the sensing metrics according to the first matrix includes: determining, according to the first matrix, a standard orthonormal basis of a noise subspace as a first standard orthonormal basis, and/or a standard orthonormal basis of a signal subspace as a second standard orthonormal basis; and obtaining the sensing metrics by performing a spectrum estimation based on the first standard orthonormal basis and/or the second standard orthonormal basis.

In the examples, the standard orthonormal basis of the noise subspace and/or the standard orthonormal basis of the signal subspace are determined according to the first matrix, and the spectrum estimation is performed based on the obtained orthonormal bases, which can determine the sensing metrics accurately, thereby ensuring the accuracy of the wireless sensing.

In combination with some examples of the second aspect, in some examples, determining, according to the first matrix, the standard orthonormal basis of the noise subspace as the first standard orthonormal basis, and/or the standard orthonormal basis of the signal subspace as the second standard orthonormal basis includes: obtaining the first standard orthonormal basis and/or the second standard orthonormal basis by performing an eigen value decomposition (EVD) on the first matrix.

In the examples, the standard orthogonal basis of the noise subspace and/or the standard orthogonal basis of the signal subspace can be accurately obtained through the EVD, which further ensures the reliability of the estimated sensing metrics, thereby ensuring the accuracy of the wireless sensing.

In combination with some examples of the second aspect, in some examples, the sensing metrics are multiple signal classification (MUSIC) metrics.

In the examples, the spectrum estimation may be performed in accordance with the MUSIC algorithm, which can quickly and effectively obtain the sensing metrics accurately representing the state of a sensing object without the need to develop an additional spectrum estimation algorithm, thereby ensuring the accuracy of the wireless sensing while ensuring the universality of the examples.

In combination with some examples of the second aspect, in some examples, the MUSIC metrics are expressed as:

$$\mathrm{P(m)} = \frac{1}{\mathbf{v}^H(m)\mathbf{U}_n\mathbf{U}_n^H\mathbf{v}(m)}, \text{ or } \mathrm{P(m)} = \frac{1}{\mathbf{v}^H(m)(\mathbf{I}_{|\mathcal{F}|} - \mathbf{U}_s\mathbf{U}_s^H)\mathbf{v}(m)};$$

where $\mathbf{v}(m) = \begin{bmatrix} 1 & e^{-j\frac{2\pi}{N_{\mathrm{FFT}}}f_1 m} & e^{-j\frac{2\pi}{N_{\mathrm{FFT}}}f_2 m} & \dots & e^{-j\frac{2\pi}{N_{\mathrm{FFT}}}f_{|\mathcal{F}|} m} \end{bmatrix}^T$ , P(m) denotes values of the MUSIC metrics with a delay of m sampling points, v(m) denotes a scan vector with a delay of m sampling points, $N_{\mathrm{FFT}}$ denotes counts of fast Fourier transform (FFT) points, $|\mathcal{F}|$ denotes counts of the at least one FDT, $f_n$ denotes a value of the n-th FDT among the at least one FDT, superscript T denotes a transpose of a matrix, superscript H denotes a conjugate transpose of a matrix, $\mathbf{U}_n$ is the first standard orthonormal basis, $\mathbf{U}_s$ is the second standard orthonormal basis, $\mathbf{I}_{|\mathcal{F}|}$ is an identity matrix with its size being $|\mathcal{F}| \times |\mathcal{F}|$, and j is an imaginary unit, that is, a square root of -1.

In the examples, the sensing metrics may be accurately expressed in accordance with the expression.

In combination with some examples of the second aspect, in some examples, the first matrix is a Hermitian Toeplitz matrix.

In the examples, the sensing metrics may be accurately calculated according to the Hermitian Toeplitz matrix.

In combination with some examples of the second aspect, in some examples, the method includes: receiving second information transmitted by the first device, where the second information is transmitted by the first device in a case of determining a second coefficient among the at least one first coefficient to be updated, and the second information includes the updated second coefficient.

In a third aspect, an example of the present invention provides a wireless sensing method, where a communication system includes a first device and a network device. The method includes: receiving, by the first device, a first reference signal that occupies at least two resource elements; and transmitting, by the first device, first information to the network device, where the first information includes at least one first coefficient, each first coefficient corresponds to one FDT, and the FDT indicates a frequency domain distance between a pair of resource elements.

In a fourth aspect, an example of the present invention provides a first information processing apparatus. The apparatus including: a receiving module, configured to receive a first reference signal that occupies at least two resource elements; and a transmitting module, configured to transmit first information to a network device, where the first information includes at least one first coefficient, each first coefficient corresponds to one FDT, and the FDT indicates a frequency domain distance between a pair of resource elements.

In a fifth aspect, an example of the present invention provides a second information processing apparatus. The apparatus including: a receiving module, configured to receive first information transmitted by a first device, where the first information includes at least one first coefficient, each first coefficient corresponds to one FDT, and the FDT indicates a frequency domain distance between a pair of resource elements, and where the first information is determined by the first device through receiving a first reference signal, and the first reference signal occupies at least two resource elements.

In a sixth aspect, an example of the present invention provides a communication device, including: one or more processors; where the one or more processors are configured to call computer instructions to cause the communication device to perform the wireless sensing methods described in the first aspect or the second aspect.

In a seventh aspect, an example of the present invention provides a storage medium having instructions stored. The instructions, when executed on a communication device, cause the communication device to perform the methods described in the optional implementations of the first aspect, the second aspect, and the third aspect.

In an eighth aspect, an example of the present invention provides a program product. The program product, when executed by a communication device, causes the communication device to perform the methods described in the optional implementations of the first aspect, the second aspect, and the third aspect.

In a ninth aspect, an example of the present invention provides a computer program, which, when executed on a computer, causes the computer to perform the methods described in the optional implementations of the first aspect, the second aspect, and the third aspect.

In a tenth aspect, an example of the present invention provides a communication system, including: a receiver, a transmitter and a sensing object. The receiver is configured to perform the methods described in the optional implementations of the first aspect, the transmitter is configured to perform the methods described in the optional implementations of the second aspect, and the sensing object is configured to perform the methods described in the optional implementations of the third aspect.

It is to be understood that the first information processing apparatus, the second information processing apparatus, the communication device, the communication system, the computer readable storage medium, and the computer program product are all used to perform the methods provided in the examples of the present invention. Therefore, the beneficial effects that can be achieved may refer to the beneficial effects of the corresponding methods, which are not described in detail here.

The examples of the present invention provide information processing methods and apparatuses, and storage media. In some examples, the terms such as the information processing method, the wireless sensing method, and the communication method may be interchanged with each other, the terms such as the information processing apparatus, the wireless sensing apparatus, and the communication apparatus may be interchanged with each other, and the terms such as the communication system, the wireless sensing system, and the communication system may be interchanged with each other.

The examples of the present invention are not exhaustive and are merely illustrations of some examples, which are not intended to specifically limit the protection scope of the present invention. Where no conflict exists, each step within a certain example may be implemented as an independent example, and various steps may be arbitrarily combined. For instance, a scheme derived by omitting certain steps from a certain example may also be implemented as an independent example, and the order of various steps within a certain example may be arbitrarily interchanged. Additionally, optional implementations of a certain example may be arbitrarily combined. Moreover, various examples may be arbitrarily combined. For instance, partial or all steps from different examples may be arbitrarily combined, and a certain example may be arbitrarily combined with the optional implementations from other examples.

In the various examples of the present invention, the terms and/or descriptions in different examples are consistent and may be referenced to each other, unless otherwise specified or in any logical conflict. The technical features in different examples may be combined to form new examples according to their inherent logical relationships.

The terms used in the examples of the present invention are only for the purpose of describing specific examples and are not intended to limit the present invention.

In the examples of the present invention, elements expressed in a singular form, such as "a," "an," "the," "above," "said," "aforementioned," and "this," may mean "one and only one," or "one or more," "at least one," etc., unless otherwise specified. For example, when using an article such as "a," "an," and "the" in English in translation, the noun following the article may be understood as a singular expression or a plural expression.

In the examples of the present invention, "plurality" refers to two or more.

In some examples, the terms such as "at least one of," "one or more," "a plurality of," and "multiple" may be interchanged with each other.

In some examples, the descriptions such as "at least one of A or B," "A and/or B," "A in one case, and B in another case," and "A in response to one case, and B in response to another case" may include the following technical solutions depending on the situation: A in some examples (where A is performed independently of B); B in some examples (where B is performed independently of A); selected to perform either A or B in some examples (where A and B are selectively performed); and A and B in some examples (where both A and B are performed). It is similar for more branches including A, B, C, etc.

In some examples, the description such as "A or B" may include the following technical solutions depending on the situation: A in some examples (where A is performed independently of B); B in some examples (where B is performed independently of A); selected to perform either A or B in some examples (where A and B are selectively performed). It is similar for more branches including A, B, C, etc.

The prefixes such as "first" and "second" in the examples of the present invention are only used to distinguish different described objects, but do not constitute any limitations on the position, order, priority, quantity or content of the described objects. The statement about the described objects refers to the claims or the description in the context of the examples, and no redundant limitations should be constituted due to the use of prefixes. For example, for the described object "field", the ordinal number before "field" in "first field" and "second field" does not limit the position or order of these "fields", and the "first" and "second" do not limit whether the "fields" they modify are in the same message, nor limit the order of the "first field" and "second field". For another example, for the described object "level", the ordinal number before "level" in "first level" and "second level" does not limit the priority between these "levels". For another example, the counts of the described objects are not limited by the ordinal numbers and may be one or more. Taking "first apparatus" as an example, the counts of the "apparatus" may be one or more. In addition, the objects modified by different prefixes may be the same or different. For example, for the described object "apparatus", the "first apparatus" and the "second apparatus" may be the same apparatus or different apparatuses, and their types may be the same or different. For another example, for the described object "information", the "first information" and the "second information" may be the same information or different information, and their contents may be the same or different.

In some examples, "including A," "comprising A," "used to indicate A," and "carrying A" may be interpreted as directly carrying A or indirectly indicating A.

In some examples, terms such as "in response to...," "in response to determining...," "in the case of ...," "at the time of...," "when...," "supposing that...," and "if..." may be interchanged with each other.

In some examples, terms such as "greater than," "greater than or equal to," "not smaller than," "more than," "more than or equal to," "not less than," "higher than," "higher than or equal to," "not lower than," and "above" may be interchanged with each other, and terms such as "smaller than," "smaller than or equal to," "not greater than," "less than," "less than or equal to," "not more than," "lower than," "lower than or equal to," "not higher than," and "below" may be interchanged with each other.

In some examples, an apparatus, etc. may be interpreted as physical or virtual, and its name is not limited to the names recorded in the examples. Terms such as "apparatus," "equipment," "device," "circuit," "network element," "node," "function," "unit," "section," "system," "network," "chip," "chip system," "entity," and "subject" may be interchanged with each other.

In some examples, a "network" may be interpreted as an apparatus included in the network (e.g., an access network (AN) device, a core network device, etc.).

In some examples, terms such as "access network device," "radio access network (RAN) device," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," and "bandwidth part (BWP)" may be interchanged with each other.

In some examples, terms such as "terminal," "terminal device," "user equipment (UE)," "user terminal," "mobile station (MS)," "mobile terminal (MT)," subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be interchanged with each other.

In some examples, the access network device, the core network device, or the network device may be replaced by a terminal. For example, the various examples of the present invention may also be applied to a structure in which communications between the access network device, the core network device, or the network device and the terminal are replaced with communications between multiple terminals (which are also referred to as device-to-device (D2D), vehicle-to-everything (V2X), etc., for example). In this case, the terminal may be configured to have all or part of the functions of the access network device. Furthermore, the words "up" and "down" may be replaced with words corresponding to the inter-terminal communication (e.g., "side"). For example, an uplink (UL) channel, a downlink (DL) channel, etc. may be replaced with a sidelink channel, and an uplink, a downlink, etc. may be replaced with a sidelink.

In some examples, the terminal may be replaced with the access network device, the core network device, or the network device. In this case, the access network device, the core network device, or the network device may be configured to have all or part of the functions of the terminal.

In some examples, the acquisition of data, information, etc. may be conducted in accordance with the laws and regulations of the country in which such activities are undertaken.

In some examples, the data, information, etc. may be acquired with the user's consent.

In addition, each element, each row, or each column in a table in the examples of the present invention may be implemented as an independent example, and a combination of any elements, any rows, and any columns may also be implemented as an independent example.

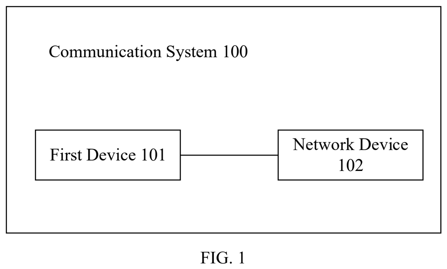

FIG. 1 is a schematic diagram illustrating an architecture of a communication system according to an example of the present invention. As illustrated in FIG. 1, the communication system 100 includes a first device 101 and a network device 102. In some examples, the first device 101 may be a sensing receiver in a sensing system, the first device 101 may be UE in a communication system, or the first device 101 may be another network device different from the network device 102.

In some examples, the network device 102 may include at least one of an access network device or a core network device.

In some examples, the communication system 100 is, for example, a long term evolution (LTE) system, a fifth generation (5G) mobile communication system, a 5G new radio (NR) system, or another future communication system, but is not limited thereto.

In some examples, the terminal includes, for example, at least one of a mobile phone, a wearable device, an Internet of Things (IoT) device, a car equipped with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, or a wireless terminal device in a smart home, but is not limited thereto.

In some examples, the access network device is, for example, a node or device that accesses the terminal to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center in the 5G communication system, a base station, an open RAN, or a cloud RAN in a sixth generation (6G) communication system, a base station in another communication system, or an access node in a wireless fidelity (WiFi) system, but is not limited thereto.

In some examples, the technical solutions of the present invention may be applicable to the Open RAN architecture. In this case, the interfaces between or within the access network devices involved in the examples of the present invention may be transformed into internal interfaces of the Open RAN. The processes and information interactions between these internal interfaces may be implemented through software or programs.

In some examples, the access network device may be composed of a central unit (CU) and one or more distributed units (DUs). The CU may also be called a control unit. The use of the CU-DU architecture allows for splitting a protocol layer of the access network device, with part of the functions of the protocol layer placed in the CU for a central control, and some or all of the remaining functions of the protocol layer distributed in the DUs that are controlled centrally by the CU. However, the present invention is not limited to these examples.

In some examples, the core network device may be a device including one or more network elements. Alternatively, the core network device may be multiple devices or a group of devices, each including all or part of the one or more network elements. The network elements may be virtual or physical. The core network includes, for example, at least one of an evolved packet core (EPC), a 5G core network (5GCN), or a next generation core (NGC).

It is to be understood that the communication system described in the examples of the present invention are intended to illustrate the technical solutions of the examples of the present invention more clearly, but do not constitute any limitation to the technical solutions provided in the examples of the present invention. Those of ordinary skill in the art will know that the technical solutions provided in the examples of the present invention are also applicable to similar technical problems which occur with the system architecture evolving and new business scenarios emerging.

The following examples of the present invention may be applied to the communication system 100 illustrated in FIG. 1, or to a part of entities thereof, but are not limited thereto. The various entities illustrated in FIG. 1 are illustrations. The communication system may include all or part of the entities in FIG. 1, and may also include other entities outside of FIG. 1. The counts and forms of the various entities are arbitrary. The connection relationship between the entities is an illustration. The entities may be connected or disconnected. The connection may be in any manner, which may be direct or indirect, and may be wired or wireless.

The various examples of the present invention may be applied to the LTE, LTE-advanced (LTE-A), LTE-beyond (LTE-B), a super third generation mobile communication system (3G), international mobile telecommunications-advanced (IMT-Advanced), a 4th generation(4G) mobile communication system, a 5G mobile communication system, 5G NR, future radio access (FRA), a new radio access technology (RAT), NR, new radio access (NX), future generation radio access (FX), a global system for mobile communications (GSM®), Code division multiplexing access (CDMA) 2000, ultra mobile broadband (UMB), IEEE 802.11 (Wi-Fi®), IEEE 802.16 (WiMAX®), IEEE 802.20, ultra-wideband (UWB), Bluetooth®, a public land mobile network (PLMN), a D2D system, a machine-to-machine (M2M) system, an IoT system, V2X, a system utilizing other communication methods, and a next-generation system extended based on them, etc. In addition, a plurality of systems may be combined (for example, a combination of the LTE or the LTE-A with the 5G, etc.) for application.

In some examples, wireless communication technologies and wireless sensing technologies are highly similar. Integrated sensing and communication (ISAC) may combine wireless communication and wireless sensing, which introduces close cooperation between the two, thereby improving spectrum efficiency and reducing network deployment costs.

In some examples, the wireless sensing is required to estimate a distance to a sensing object, as well as its azimuth (such as horizontal and vertical angles) and speed. Optionally, the sensing also includes a wireless tracking of the sensing object and a radio frequency identification of the sensing object.

In some examples, in order to perform a high-precision sensing, a sensing transmitter may transmit a dedicated reference signal. This reference signal may be referred to as a sensing reference signal. In a bistatic mode, the sensing receiver measures the sensing reference signal to estimate the distance, angle, and/or speed of the sensing object. In a monostatic mode, the sensing transmitter estimates the distance, angle, and/or speed of the sensing object by measuring the echo of the sensing reference signal.

In the monostatic mode, the sensing transmitter and the sensing receiver are co-located. For example, the sensing transmitter and the sensing receiver are deployed on the same device. In the bistatic mode, the sensing receiver and the sensing transmitter are not co-located. For example, the sensing transmitter and the sensing receiver are deployed on different devices or at different positions of the same device.

In some examples, the result of the sensing receiver measuring the sensing reference signal is to be reported to the core network, which is, for example, a network unit such as a LMF or a SMF, through a LTE positioning protocol (LPP). The fusion of the sensing information and the calculation and estimation of the final sensing metrics (e.g., distance, angle, and/or speed, etc.) are completed by the network unit.

In some implementations, the sensing receiver directly reports the received raw signal on the resource elements of the sensing reference signal, a CSI-RS or a tracking reference signal (TRS), or directly reports, by multiplying the received raw signal by the corresponding reference signal symbol and after a conjugation, to the core network unit such as the LMF or the SMF.

In some possible implementations, in actual wireless sensing and wireless communication scenarios, the reference signals may be distributed in a plurality of dimensions. For example, the sensing transmitter or the base station uses a plurality of transmit antennas to transmit the reference signal; the sensing receiver uses a plurality of receive antennas to receive the reference signal; the reference signal occupies a plurality of time units, such as a plurality of OFDM symbols; and the reference signal is even transmitted within a plurality of frequency ranges, such as a plurality of component carriers (CCs) or BWPs.

In this way, the raw signal received by the sensing receiver on the resource elements of the reference signal is a multi-dimensional signal. If they are directly reported to the core network or the base station without any processing (including the fusion), the reported overheads are very large, and a large amount of spectrum resources will inevitably be occupied. Considering a situation where multiple receivers report at the same time, a network congestion may even occur.

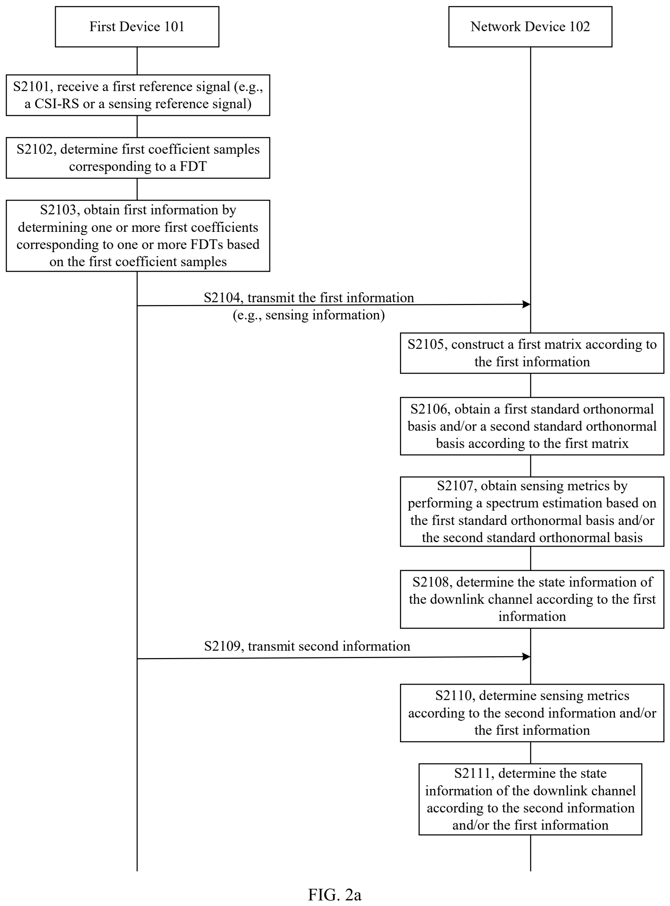

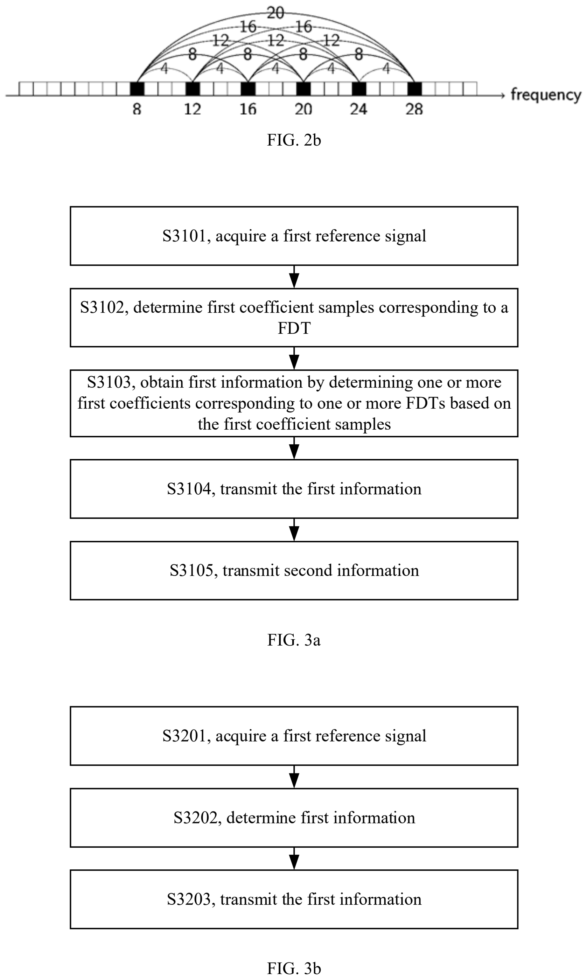

FIG. 2a is a schematic diagram illustrating interactions of a wireless sensing method according to an example of the present invention. As illustrated in FIG. 2, the example of the present invention relates to wireless sensing, which is applicable to the communication system 100. The method includes the following steps.

At step S2101, the first device 101 receives a first reference signal.

Optionally, the first reference signal may be transmitted by a sensing transmitter, or may be transmitted by the network device 102, for example, may be transmitted by a base station, which is not limited in the examples of the present invention. Optionally, the first device 101 may also serve as the sensing transmitter to transmit the first reference signal. For example, when the sensing transmitter and a sensing receiver are co-located, the first device 101 may act as the sensing transmitter to transmit the first reference signal, and may receive the first reference signal transmitted by itself and perform subsequent steps.

Optionally, the first reference signal is used for the wireless sensing, or the first reference signal is used for determining state information of a downlink channel.

In some examples, the first reference signal is a sensing reference signal. In some examples, the first reference signal is a CSI-RS.

In some examples, the first reference signal occupies at least two resource elements. The resource elements may be time-frequency domain resources. Optionally, the first reference signal includes data transmitted on the at least two resource elements. Optionally, the resource elements may be distributed on different OFDM symbols. Optionally, the at least two resource elements occupied by the first reference signal are distributed on at least two subcarriers. Optionally, the subcarriers may be OFDM subcarriers.

In some examples, a resource element may also be referred to as a resource particle, or any name that may be interchanged with the resource element. The examples of the present invention do not limit the name of the resource element.

At step S2102, the first device 101 determines first coefficient samples corresponding to a FDT.

In some examples, the FDT indicates a frequency domain distance between a pair of resource elements. Optionally, the FDT is determined according to the counts of subcarriers between the pair of resource elements. Optionally, the FDT is a positive integer. Optionally, the pair of resource elements indicated by the FDT are resource elements on the same OFDM symbol.

In some examples, all or part of the first coefficient samples for at least one FDT may be determined. For example, all or part of the first coefficient samples corresponding to each FDT in a second FDT set may be determined, or all or part of the first coefficient samples corresponding to part of the FDTs in the second FDT set may be determined. The examples of the present invention do not limit the counts of the FDTs or the counts of the first coefficient samples corresponding to the FDTs.

Optionally, the first coefficient samples may be used to calculate the first coefficient. Optionally, the first coefficient sample may also be called a first sub-coefficient, a sensing parameter, a normalized correlation parameter, a normalized correlation coefficient sample, etc. The examples of the present invention do not limit the name of the first coefficient sample.

In some examples, the first device 101 may determine the first coefficient samples for each FDT in the second FDT set. Optionally, the second FDT set may be determined based on a set of subcarrier positions of all resource elements occupied by the first reference signal.

In some examples, the FDTs corresponding to the first coefficient samples determined by the first device 101 may constitute a first FDT set. The first FDT set may be a subset of the second FDT set. Optionally, the second FDT set may be determined based on the set of subcarrier positions of all resource elements occupied by the first reference signal.

In some examples, step S2102 may include the following steps: determining the first coefficient samples corresponding to a first resource element pair based on channel frequency responses of two resource elements in the first resource element pair. Optionally, the first coefficient samples corresponding to each FDT may be determined based on the channel frequency responses of the corresponding resource element pair.

Optionally, the first resource element pair is any pair of resource elements corresponding to a first FDT. Optionally, the first FDT may be any FDT, for example, may be any FDT in the second FDT set. Optionally, one first coefficient sample corresponds to one resource element pair.

Optionally, the first coefficient samples for one resource element pair may be determined in accordance with the following formula: $\frac{H_a H_b^*}{|H_a||H_b|}$ , where $H_a$ and $H_b$ denote channel frequency responses of two resource elements in the resource element pair, respectively. Optionally, a and b may respectively denote the subcarrier positions on which two resource elements are distributed, and an absolute value of the difference between a and b is equal to the first FDT.

In some examples, one FDT may correspond to a plurality of resource element pairs. Accordingly, the first coefficient samples corresponding to each resource element pair may be determined separately based on the channel frequency responses of the plurality of resource element pairs.

Optionally, the plurality of resource element pairs corresponding to one FDT may include resource element pairs distributed on different OFDM symbols. The two resource elements in any resource element pair corresponding to one FDT are distributed in the same OFDM symbol, but may be distributed in different subcarriers, or be used by different transmit-receive antenna pairs, or be used by different transmit-receive antenna ports.

In some examples, one or more resource element pairs corresponding to the first FDT includes at least one of the following: a resource element pair consisting of two resource elements distributed on different subcarriers; at least two resource element pairs used by different transmit-receive antenna pairs; at least two resource element pairs used by different transmit-receive antenna port pairs; or at least two resource element pairs distributed on different OFDM symbols.

In some examples, for the at least two resource element pairs used by different transmit-receive antenna pairs, the at least two resource element pairs used by different transmit-receive antenna port pairs, and the at least two resource element pairs distributed on different subcarriers, the resource elements in various resource element pair may be distributed on different subcarriers.

Optionally, the resource element pairs consisting of two resource elements distributed on different subcarriers may include at least one of the following: at least two resource element pairs used by different transmit-receive antenna pairs; at least two resource element pairs used by different transmit-receive antenna port pairs; or at least two resource element pairs distributed on different OFDM symbols.

It may be understood that which first coefficients are specifically covered by the first coefficient samples corresponding to the first FDT may be determined according to actual conditions. For example, if the same transmit-receive antenna pair is used to transmit the first reference signal, there is no different transmit-receive antenna pair corresponding to the first FDT, that is, no first coefficient based on the channel frequency response of a different transmit-receive antenna pair corresponding to the first FDT is included.

In combination with the optional implementations provided in the examples of the present invention and referring to the schematic diagram of resource occupancy of the first reference signal illustrated in FIG. 2b, the horizontal axis represents frequency, each rectangular grid represents a resource element, all the resource elements are distributed in the same OFDM symbol, and the black-filled grid represents the resource element occupied for transmitting the first reference signal. As illustrated in FIG. 2b, the resource elements of the first reference signal are distributed on the 8th, 12th, 16th, 20th, 24th, and 28th subcarriers. Correspondingly, the set of subcarrier positions of the resource elements $\mathcal{K}$ = {8, 12, 16, 20, 24, 28}.

Referring to the schematic diagram of resource occupancy of the first reference signal illustrated in FIG. 2b, all resource elements of the first reference signal may be distributed in the same OFDM symbol, and just a pair of transmit-receive antennas or a pair of transmit-receive antenna ports may be used. Optionally, based on the schematic diagram of resource occupancy illustrated in FIG. 2b, the resource element pairs corresponding to one FDT only includes resource element pairs consisting of two resource elements distributed on different subcarriers.

Further, the second FDT set $\mathcal{F}$ may be determined in accordance with the following formula: $\mathcal{F} = \{k_i - k_j \mid k_i > k_j; k_i, k_j \in \mathcal{K}\}$. That is, based on the set of subcarrier positions of all the resource elements occupied by the first reference signal, it may obtain the second FDT set $\mathcal{F} = \{4, 8, 12, 16, 20\}$. For example, in step S2102, at least one first coefficient sample corresponding to at least one FDT in the set $\mathcal{F}$ may be determined. As an example, at least one first coefficient sample corresponding to the FDT being 4 may be obtained as follows:

$$\frac{H_8 H_{12}^*}{|H_8||H_{12}|}, \quad \frac{H_{12} H_{16}^*}{|H_{12}||H_{16}|}, \quad \frac{H_{16} H_{20}^*}{|H_{16}||H_{20}|}, \quad \frac{H_{20} H_{24}^*}{|H_{20}||H_{24}|}, \quad \frac{H_{24} H_{28}^*}{|H_{24}||H_{28}|}$$; at least one first coefficient sample corresponding to the FDT being 8 may be obtained as follows: $$\frac{H_8 H_{16}^*}{|H_8||H_{16}|}, \quad \frac{H_{12} H_{20}^*}{|H_{12}||H_{20}|}, \quad \frac{H_{16} H_{24}^*}{|H_{16}||H_{24}|}, \quad \frac{H_{20} H_{28}^*}{|H_{20}||H_{28}|}$$; at least one first coefficient sample corresponding to the FDT being 12 may be obtained as follows:

$$\frac{H_8 H_{20}^*}{|H_8||H_{20}|}, \quad \frac{H_{12} H_{24}^*}{|H_{12}||H_{24}|}, \quad \frac{H_{16} H_{28}^*}{|H_{16}||H_{28}|}$$; at least one first coefficient sample corresponding to the FDT being 16 may be obtained as follows: $$\frac{H_8 H_{24}^*}{|H_8||H_{24}|}, \quad \frac{H_{12} H_{28}^*}{|H_{12}||H_{28}|}$$; and at least one first coefficient sample corresponding to the FDT being 20 may be obtained as follows: $$\frac{H_8 H_{28}^*}{|H_8||H_{28}|}$$.

It is worth noting that, for ease of understanding, the frequency domain resources of the first reference signal illustrated in FIG. 2b are uniformly comb-distributed, but the examples of the present invention may be applicable to the case where the first reference signal is arbitrarily distributed (including non-uniformly distributed) in the frequency domain.

It may be understood that the resource occupancy of the first reference signal illustrated in FIG. 2b shows only the resource occupancy state corresponding to one transmit-receive antenna pair or one transmit-receive antenna port pair, and it only occupies part of the frequency domain resources of one OFDM symbol. In some examples, the first reference signal may be transmitted through a plurality of pairs of transmit-receive antennas or a plurality of pairs of transmit-receive antenna ports, or the first reference signal may be transmitted using the frequency domain resources of a plurality of OFDM symbols.

At step S2103, the first device 101 obtain first information by determining one or more first coefficients corresponding to one or more FDTs based on the first coefficient samples.

In some examples, each first coefficient corresponds to one FDT. Optionally, the first information includes at least one first coefficient. Optionally, the magnitude of each first coefficient is less than or equal to 1. Optionally, the first device 101 may determine the one or more first coefficients corresponding to at least one FDT. In some examples, step S2103 may determine the first coefficient corresponding to each FDT in the second FDT set, or one or more first coefficients corresponding to one or more FDTs in the second FDT set.

In some examples, the first device 101 determines and obtains the at least one first coefficient. That is, the one or more FDTs corresponding to the at least one first coefficient included in the first information constitute the first FDT set. Optionally, the first FDT set may be a subset of a second FDT set. Optionally, the second FDT set may be determined based on the set of subcarrier positions of all resource elements occupied by the first reference signal.

In some examples, the first FDT set includes all the FDTs in the second FDT set. Optionally, the first FDT set includes the smallest N FDTs in the second FDT set, where N is a positive integer. Optionally, the first FDT set includes the FDTs in the second FDT set corresponding to a longest arithmetic sequence.

In some examples, the value of N may be configured by the network device 102. For example, the value of N may be configured by the base station for the first device 101 through RRC signaling. In some examples, the value of N may be predefined by a protocol or be sent from an upper layer. The examples of the present invention do not limit the specific value of N.

Taking the schematic diagram of resource occupancy of the first reference signal illustrated in FIG. 2b as an example, the first FDT set may be identical to the second FDT set, for example. Alternatively, taking N=3 as an example, the first FDT set may only include three FDTs: 4, 8, and 12.

In another example, if the second FDT set includes five FDTs: 4, 8, 12, 16, and 18, with the longest arithmetic sequence being {4, 8, 12, 16}, the first FDT set may only include four FDTs: 4, 8, 12, and 16.

In some examples, the first coefficient may be a "normalized correlation coefficient" or a "FDT coefficient," etc. The examples of the present invention do not limit the name of the first coefficient.

Optionally, the first information may include one or more first coefficients corresponding to the at least one FDT, or the first information may be one or more first coefficients corresponding to the at least one FDT. Optionally, the first information may include the first coefficient corresponding to each FDT. Optionally, the first information may include one or more first coefficients corresponding to all or part of the FDTs in the second FDT set.

In some examples, the first information is used by the network device 102 to determine sensing metrics, or the first information is used by the network device 102 to determine state information of a downlink channel. For example, the first information may be sensing

information used to determine the sensing metrics, or the first information may be CSI used to determine a state of the downlink channel.

In some examples, the one or more first coefficients contained in the first information are capable of being used for the wireless sensing or for the state information determination of the downlink channel. For example, the one or more first coefficients in the first information may be used to estimate timing, distance and direction, etc. The first information may also be used to determine the state information of the downlink channel.

In some examples, the specific type of the first information may depend on the type of the received first reference signal. Optionally, the first reference signal is a CSI-RS, and the first information is CSI. Optionally, the first reference signal is a sensing reference signal, and the first information is sensing information.

In some examples, the name of the first information is not limited, which may be, for example, "first coefficient set," "sensing information," "channel state information," etc.

In some examples, the one or more first coefficients corresponding to the at least one FDT included in the first information may be arranged in a specific order. As an example, they may be arranged in an ascending order or in a descending order depending on the size of the FDTs. For example, the first information includes first coefficients corresponding to the FDTs being 4, 8, 12, 16, and 20, respectively, and the first information may include a sequence of the first coefficients arranged in the ascending order depending on the size of the FDTs.

In some examples, the first coefficient corresponding to one FDT may be obtained by calculating a statistical average of first coefficient samples corresponding to the FDT. In other examples, the first coefficient may be obtained by calculating the first coefficient samples in other ways, such as calculating the statistical average after weighting each first coefficient sample, which is not limited in the examples of the present invention.

As an example, referring to the schematic diagram of frequency domain resource occupancy of the first reference signal illustrated in FIG. 2b, the first information may, for example, include one or more first coefficients corresponding to one or more FDTs in the second FDT set $\mathcal{F}$ ={4, 8, 12, 16, 20}. For example, the first information may include set $\mathcal{C}$ = {$c_4$, $c_8$, $c_{12}$, $c_{16}$, $c_{20}$}. In this case, the first FDT set, which is composed of the FDTs corresponding to the first coefficients included in the first information, includes all the FDTs in the second FDT set. Optionally, the elements in set $C$ are arranged in the ascending order depending on the size of the FDTs.

Particularly, set $\mathcal{C}$ may sequentially include: the first coefficient

$$c_4 = \frac{1}{5}\left(\frac{H_8 H_{12}^*}{|H_8||H_{12}|} + \frac{H_{12}H_{16}^*}{|H_{12}||H_{16}|} + \frac{H_{16}H_{20}^*}{|H_{16}||H_{20}|} + H20H24 * H20H24 + H24H28 * H24H28\right)$$ , which corresponds to the FDT being 4; the first coefficient $c_8 = \frac{1}{4}\left(\frac{H_8 H_{16}^*}{|H_8||H_{16}|} + \frac{H_{12}H_{20}^*}{|H_{12}||H_{20}|} + \frac{H_{16}H_{24}^*}{|H_{16}||H_{24}|} + \frac{H_{20}H_{28}^*}{|H_{20}||H_{28}|}\right)$,

which corresponds to the FDT being 8; the first coefficient

$$c_{12} = \frac{1}{3}\left(\frac{H_8 H_{20}^*}{|H_8||H_{20}|} + H12H24 * \ H12H24 + H16H28 * H16H28\right)$$ ), which corresponds to the FDT being 12; the first coefficient $c_{16} = \frac{1}{2}\left(\frac{H_8 H_{24}^*}{|H_8||H_{24}|} + \frac{H_{12}H_{28}^*}{|H_{12}||H_{28}|}\right)$ , which corresponds to the FDT being 16; and the first coefficient $c_{20} = \frac{H_8 H_{28}^*}{|H_8||H_{28}|}$ , which corresponds to the FDT being 20.

At step S2104, the first device 101 transmits the first information.

Optionally, the first information in step S2104 may be determined and obtained based on steps S2102 to S2103, or may be obtained in other ways, for example, being determined by the first device 101 based on a protocol, or being sent by an upper layer, which is not limited in the examples of the present invention. In some examples, the first information may be determined based on the first reference signal. Optionally, the first information may be directly determined from channel frequency responses of various resource elements occupied by transmitting the first reference signal. Optionally, in the case that the first information is determined by the first device 101 based on the protocol or is sent by the upper layer, steps S2102 to S2103 may be omitted or replaced.

In some examples, the first device 101 transmits the first information to the network device 102, or the first device 101 broadcasts the first information, or the first device 101 transmits the first information to another entity, which is not limited in the examples of the present invention.

In some examples, the network device 102 includes at least one of the following: a LMF network element, a SMF network element, or a base station. Optionally, the LMF network element and the SMF network element may be used for the wireless sensing, for example, for determining the sensing metrics. Optionally, the base station may be used for determining the state information of the downlink channel.

Optionally, the first information is transmitted to the LMF network element. Optionally, the first information is transmitted to the SMF network element. Optionally, the first information is transmitted to the LMF network element and the SMF network element. Optionally, the first information is transmitted to the base station. Optionally, the first information is transmitted to the base station, and the base station transmitted the first information to the LMF network element and/or the SMF network element.

In some examples, to which network device 102 the first information is transmitted may be determined based on the type of the first information. Optionally, the first information is transmitted to the base station and the LMF network element and/or the SMF network element. Particularly, the first information transmitted to the base station and the first information transmitted to the LMF network element and/or the SMF network element may be different types of information. For example, the first information transmitted to the base station may be the first information used for determining the state information of the downlink channel, and the first information transmitted to the LMF network element and/or the SMF network element may be the first information used for determining the sensing metrics.

As an example, if the first information is the CSI or time domain channel characteristics, the first device 101 may transmit the first information to the base station. If the first information is the sensing information, the first information may be transmitted to the LMF network element and/or the SMF network element.

In some examples, the network device 102 receives the first information. Optionally, the LMF network element receives the first information. Optionally, the SMF network element receives the first information. Optionally, the LMF network element and the SMF network element receive the first information. Optionally, the base station receives the first information. Optionally, the base station receives the first information and transmits the first information to the LMF network element and/or the SMF network element.

At step S2105, the network device 102 constructs a first matrix according to the first information.

Optionally, the first matrix may be a Hermitian Toeplitz matrix. Optionally, the first matrix may be any matrix that is capable of being used by the network device 102 to determine the sensing metrics. For example, the first matrix may be a Toeplitz matrix or a circulant matrix. Optionally, the first matrix may be specifically constructed according to the one or more first coefficients corresponding to the at least one FDT in the first information.

Referring to the example illustrated in FIG. 2b, the constructed first matrix may be, for example, the following matrix:

$$\mathbf{R} = \begin{bmatrix} 1 & c_4^* & c_8^* & c_{12}^* & c_{16}^* & c_{20}^* \\ c_4 & 1 & c_4^* & c_8^* & c_{12}^* & c_{16}^* \\ c_8 & c_4 & 1 & c_4^* & c_8^* & c_{12}^* \\ c_{12} & c_8 & c_4 & 1 & c_4^* & c_8^* \\ c_{16} & c_{12} & c_8 & c_4 & 1 & c_4^* \\ c_{20} & c_{16} & c_{12} & c_8 & c_4 & 1 \end{bmatrix}.$$

It may be understood that when the first FDT set composed of the one or more FDTs corresponding to the at least one first coefficient included in the first information only includes part of the FDTs in the second FDT set, the network device 102 may construct the first matrix according to the first coefficients corresponding to various FDTs in the first FDT set.

As an example, if the second FDT set includes five FDTs: 4, 8, 12, 16, and 18, with the longest arithmetic sequence being {4, 8, 12, 16}, the first FDT set may only include four FDTs: 4, 8, 12, and 16. Accordingly, the following matrix may be constructed according to the first information corresponding to the first FDT set, and subsequent steps may be performed according to the following matrix:
$$\mathbf{R} = \begin{bmatrix} 1 & c_4^* & c_8^* & c_{12}^* & c_{16}^* \\ c_4 & 1 & c_4^* & c_8^* & c_{12}^* \\ c_8 & c_4 & 1 & c_4^* & c_8^* \\ c_{12} & c_8 & c_4 & 1 & c_4^* \\ c_{16} & c_{12} & c_8 & c_4 & 1 \end{bmatrix}.$$

At step S2106, the network device 102 obtains a first standard orthonormal basis and/or a second standard orthonormal basis according to the first matrix.

In some examples, the network device 102 may obtain the first standard orthonormal basis and/or the second standard orthonormal basis by performing an EVD on the first matrix. Optionally, the first standard orthonormal basis is a standard orthonormal basis of a noise subspace. Optionally, the second standard orthonormal basis is a standard orthonormal basis of a signal subspace.

In some examples, obtaining the first standard orthonormal basis and/or the second standard orthonormal basis by performing the EVD on the first matrix may be expressed as: $\mathbf{R} = [\mathbf{U}_s \quad \mathbf{U}_n] \begin{bmatrix} \mathbf{\Lambda}_s & \\ & \mathbf{\Lambda}_n \end{bmatrix} \begin{bmatrix} \mathbf{U}_s^H \\ \mathbf{U}_n^H \end{bmatrix}$ . Particularly, $\mathbf{U}_n$

denotes the first standard orthonormal basis, $\mathbf{U}_s$ denotes the second standard orthonormal basis, $\Lambda_s$ denotes the eigen values corresponding to a basis vector of the signal subspace, and $\Lambda_n$ denotes the eigen values corresponding to a basis vector of the noise subspace.

In other examples, the first standard orthogonal basis and/or the second standard orthogonal basis may be obtained according to the first matrix in other ways. For example, the first standard orthogonal basis and/or the second standard orthogonal basis may be calculated in a Schmidt orthogonalization scheme, which is not limited in the examples of the present invention.

At step S2107, the network device 102 obtain the sensing metrics by performing a spectrum estimation based on the first standard orthonormal basis and/or the second standard orthonormal basis.

Optionally, a MUSIC spectrum estimation may be performed based on the first standard orthonormal basis and/or the second standard orthonormal basis, or estimating signal parameters via rational invariant technique (ESPRIT) may be performed, etc.

As an example, taking the MUSIC spectrum estimation as an example, the obtained sensing metrics may be expressed as $P(m) = \dfrac{1}{\mathbf{v}^H(m)\mathbf{U}_n\mathbf{U}_n^H\mathbf{v}(m)}$ ; or $P(m) = \dfrac{1}{\mathbf{v}^H(m)(\mathbf{I}_{|\mathcal{F}|} - \mathbf{U}_s\mathbf{U}_s^H)\mathbf{v}(m)}$ .

Optionally, $\mathbf{v}(m) = \begin{bmatrix} 1 & e^{-j\frac{2\pi}{N_{\text{FFT}}}f_1 m} & e^{-j\frac{2\pi}{N_{\text{FFT}}}f_2 m} & \dots & e^{-j\frac{2\pi}{N_{\text{FFT}}}f_{|\mathcal{F}|} m} \end{bmatrix}^T$ , P(m) denotes values of MUSIC metrics with a delay of m sampling points, v(m) denotes a scan vector with a delay of m sampling points, $N_{\text{FFT}}$ denotes counts of fast Fourier transform (FFT) points, $|\mathcal{F}|$ denotes counts of the at least one FDT, $f_n$ denotes a value of the n-th FDT among the at least one FDT, superscript T denotes a transpose of a matrix, superscript H denotes a conjugate transpose of a matrix, $\mathbf{U}_n$ denotes the first standard orthonormal basis, $\mathbf{U}_s$ denotes the second standard orthonormal basis, $\mathbf{I}_{|\mathcal{F}|}$ denotes an identity matrix with its size being $|\mathcal{F}| \times |\mathcal{F}|$, and j denotes an imaginary unit, that is, a square root of -1.

Optionally, m may be any positive integer, for example, m=3. Based on such m, the values of the MUSIC metrics with a delay of 3 sampling points may be determined.

Optionally, if the first information includes the first coefficient of each FDT in a FDT set, $|\mathcal{F}|$ may denote the counts of the elements in the FDT set, that is, the counts of the FDTs.

In other examples, the sensing metrics of the MUSIC spectrum estimation may be expressed in other forms, which are not limited in the examples of the present invention.

In some examples, the sensing metrics may be used for indicating information such as Doppler frequency, motion direction, and/or speed of the sensing object.

In some examples, the sensing metrics may include a sensing spectrum estimation or a spectrum estimation component. Optionally, a value of the sensing metrics may also be referred to as a sensing spectrum estimation or a sensing spectrum estimation component.

At step S2108, the network device 102 determines the state information of the downlink channel according to the first information.

In some examples, the network device 102, such as the base station, may determine or time domain precoding information based on the first coefficients corresponding to various FDTs included in the first information. Optionally, the network device 102 may further perform corresponding compensation for a downlink transmission through the time domain precoding, thereby achieving more accurate signal transmission.

In some examples, the network device 102 may further combine other information to determine the state information of the downlink channel. For example, the network device 102 may further determine the state information of the downlink channel according to the first information in combination with information stored by itself.

At step S2109, the first device 101 transmits second information.

Optionally, the second information in step S2109 may be determined by the first device 101 itself, or may be obtained in other ways, for example, being determined by the first device 101 based on a protocol, or being sent by an upper layer, which is not limited in the examples of the present invention.

In some examples, the second information is used by the network device 102 to determine the sensing metrics, or the second information is used by the network device 102 to determine the state information of the downlink channel. Optionally, the second information indicates that a second coefficient among the at least one first coefficient included in the first information is updated. Optionally, the second information may be the updated second coefficient, or the second information may include the updated second coefficient. Particularly, the second coefficient may be any one of the at least one first coefficient.

In some examples, the second information may be determined based on the second reference signal. Optionally, the second information may be directly determined from channel frequency responses of various resource elements occupied by transmitting the second reference signal. Optionally, the second reference signal may be a reference signal received by the first device 101 after receiving the first reference signal.

In some examples, the specific type of the second information may depend on the type of the received new second reference signal. Optionally, the new reference signal is a CSI-RS, and the second information is CSI. Optionally, the new reference signal is a sensing reference signal, and the second information is sensing information.

In some examples, the name of the second information is not limited and may be, for example, "updated coefficient set," "updated information," "sensing update information," "channel state update information," "sensing information," "channel state information," etc.

In some examples, the first device 101 transmits the second information to the network device 102. Optionally, the second information is transmitted to the LMF network element. Optionally, the second information is transmitted to the SMF network element. Optionally, the second information is transmitted to the LMF network element and the SMF network element. Optionally, the second information is transmitted to the base station. Optionally, the second information is transmitted to the base station, and the base station transmits the second information to the LMF network element and/or the SMF network element.

In some examples, to which network device 102 the second information is transmitted may be determined based on the type of the second information. Optionally, the second information is transmitted to the base station and to the LMF network element and/or the SMF network element. Particularly, the first information transmitted to the base station and the second information transmitted to the LMF network element and/or the SMF network element may be different types of information. For example, the second information transmitted to the base station may be the second information used for determining the state information of the downlink channel, and the second information transmitted to the LMF network element and/or the SMF network element may be the second information used for determining the sensing metrics.

In some examples, the network device 102 receives the second information transmitted by the first device 101. Optionally, the second information is transmitted by the first device in the case of determining that the second coefficient among the at least one first coefficient is updated. Optionally, the second information includes the updated second coefficient.

In some examples, the first device 101 transmits the second information in response to updating the second coefficient among the at least one first coefficient included in the first information. In some examples, the first device 101 transmits the second information in the case of determining that the second coefficient among the at least one first coefficient included in the first information has been updated. In some examples, the first device 101 transmits the second information when determining that the second coefficient among the at least one first coefficient included in the first information is updated.

As an example, when receiving the new reference signal, the first device 101 may determine one or more updated first coefficients corresponding to the at least one FDT based on the reference signal. If the updated first coefficients contain a different first coefficient corresponding to the same FDT in the first information, the second information may be transmitted. Optionally, the optional implementations for determining the updated first coefficient may make reference to the optional implementations in steps S2102 to S2103. For example, when receiving the new reference signal, the first device 101 may determine the updated first coefficient samples based on the reference signal, and determine the first coefficients corresponding to various FDTs based on the first coefficient samples, compare them with the one or more first coefficients before receiving the new reference signal, and then determine whether there is any updated second coefficient to be transmitted.

In some examples, the second coefficients may include a plurality of the first coefficients. Optionally, the first device 101 determines that a plurality of first coefficients among the at least one first coefficient included in the first information are updated, and transmits the second information. Optionally, the second information may include the plurality of updated first coefficients.

In some other examples, the second information may further include the first coefficient corresponding to each of the at least one FDT included in the first information. Optionally, the second information may further include the first coefficient corresponding to each FDT in the second FDT set or the first FDT set.

Optionally, the optional determination scheme for the second information and the updated first coefficient may refer to the optional implementations of step S2102 and step S2103, as well as refer to other related parts in the example involved in FIG. 2a, which are not described in detail here.

At step S2110, the network device 102 determines sensing metrics according to the second information and/or the first information.

In some examples, if the second information only includes the first coefficients corresponding to second FDTs, the network device 102 may determine the sensing metrics according to the first coefficients included in the second information in combination with the first coefficients included in the first information. Optionally, if the second information includes the first coefficient corresponding to each of the at least one FDT included in the first information, the network device 102 may directly determine the sensing metrics based on the second information without the participation of the first coefficients included in the first information.

In some examples, the optional implementations of step S2110 may refer to the optional implementations of steps S2105 to S2107, which are not described in detail here. As an example, the first coefficients corresponding to the second FDTs in the first matrix may be replaced with the updated first coefficients corresponding to the second FDTs included in the second information, and the sensing metrics may be determined according to the first matrix after the replacement, but the present invention is not limited thereto.

At step S2111, the network device 102 determines the state information of the downlink channel according to the second information and/or the first information.

In some examples, if the second information only includes the first coefficients corresponding to the second FDTs, the network device 102 may determine the sensing metrics or the state information of the downlink channel according to the first coefficients included in the second information in combination with the first coefficients included in the first information. Optionally, if the second information includes the first coefficient corresponding to each of the at least one FDT included in the first information, the network device 102 may directly determine the sensing metrics or the state information of the downlink channel according to the second information without the participation of the first coefficients included in the first information.

Optionally, the optional implementations of step S2111 may refer to the optional implementations of step S2108, which are not described in detail here.

In some examples, steps S2109 to S2111 may be performed after step S2104 is completed.

In some examples, steps S2109 to S2111 may be performed only when the first device 101 determines that a first coefficient has been updated. If there is no first coefficient update to be transmitted, steps S2109 to S2111 may be omitted.

In some examples, after receiving the reference signal and determining the first coefficient corresponding to each FDT based on the reference signal, the first device 101 may determine whether the first coefficient corresponding to each FDT has been transmitted to the network device 102. If it has not, the first device 101 may perform step S2104. If it has, the first device 101 may determine whether the first coefficient corresponding to each FDT that has determined currently is updated. The first device 101 may perform step S2109 upon the presence of the updated first coefficient, so as to cause the network device 102 to perform step S2110 or S2111.

In some examples, the names of information, etc. are not limited to the names described in the examples, and terms such as "information," "message," "signal," "signaling," "report," "configuration," "indication," "instruction," "command," "channel," "parameter," "domain," "field," "symbol," "code unit," "codebook," "codeword," "codepoint," "bit," "data," "program," and "chip" may be interchanged with each other.

In some examples, the terms "codebook," "codeword," "precoding matrix" and the like may be interchanged with each other. For example, the codebook may be a collection of one or more codewords/precoding matrices.

In some examples, terms such as "up," "uplink," and "physical uplink" may be interchanged with each other, terms such as "down," "downlink," and "physical downlink" may be interchanged with each other, and terms such as "side," "sidelink," "side communication," "sidelink communication," "direct," "direct link," "direct communication," and "direct link communication" may be interchanged with each other.

In some examples, terms such as "downlink control information (DCI)," "downlink assignment," "downlink DCI," "uplink grant," and "uplink DCI" may be interchanged with each other.

In some examples, terms such as "physical downlink shared channel (PDSCH)" and "downlink data" may be interchanged with each other, and terms such as "physical uplink shared channel (PUSCH)" and "uplink data" may be interchanged with each other.

In some examples, terms such as "radio," "wireless," "RAN," "AN," and "RAN-based" may be interchanged with each other.

In some examples, terms such as "search space," "search space set," "search space configuration," "search space set configuration," "control resource set (CORESET)," and "CORESET configuration" may be interchanged with each other.

In some examples, terms such as "synchronization signal (SS)," "synchronization signal block (SSB)," "reference signal (RS)," "pilot," and "pilot signal" may be interchanged with each other.

In some examples, terms such as "moment," "time point," "time," and "time position" may be interchanged with each other, and terms such as "duration," "period," "time window," "window," and "time" may be interchanged with each other.

In some examples, terms such as "component carrier (CC)," "cell," "frequency carrier," and "carrier frequency" may be interchanged with each other.

In some examples, terms such as "resource block (RB)," "physical resource block (PRB)," "sub-carrier group (SCG)," "resource element group (REG)," "PRB pair," "RB pair," "resource element," "sub-carrier," and "resource element" may be interchanged with each other.

In some examples, terms such as wireless access scheme and waveform may be interchanged with each other.

In some examples, terms such as "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element," and "panel" may be interchanged with each other.

In some examples, terms such as "frame," "radio frame," "subframe," "slot," "sub-slot," "mini-slot," "symbol," "code unit," and "transmission time interval (TTI)" may be interchanged with each other.

In some examples, "acquire," "get," "obtain," "receive," "transfer," "dual-directionally transfer," "transmit and/or receive" may be interchanged with each other, and may be interpreted as receiving from other entities, acquiring from protocols, acquiring from higher layers, obtaining by self-processing, autonomous implementation, etc.

In some examples, terms such as "send," "transmit," "report," "issue," "transfer," "dual-directionally transfer," and "transmit and/or receive" may be interchanged with each other.

In some examples, terms such as "certain," "preseted," "preset," "setting," "indicated," "a certain," "any," and "first" may be interchanged with each other. "Certain A," "presetted A," "preset A," "setting A," "indicated A," "a certain A," "any A," and "first A" may be interpreted as A pre-specified in a protocol, etc., or be interpreted as A obtained through setting, configuration, or indication, etc., or be interpreted as certain A, a certain A, any A, or first A, etc., but are not limited thereto.

In some examples, the determination or judgment may be performed by value (0 or 1) indicated through 1 bit, or by a true/false value (Boolean value) indicated through true or false, or by comparison of numerical values (for example, comparison with a predetermined value), but is not limited thereto.

In some examples, "not expecting to receive" may be interpreted as not receiving on a time domain resource and/or a frequency domain resource, or be interpreted as not performing subsequent processing on the data after receiving it; "not expecting to transmit" may be interpreted as not transmitting, or be interpreted as transmitting but not expecting the receiver to respond to the content transmitted.

The wireless sensing method involved in the example of the present invention may include at least one of steps S2101 to S2107. For example, step S2103 may be implemented as an independent example, step S2104 may be implemented as an independent example, step S2105 may be implemented as an independent example, steps S2101 to S2104 may be implemented as an independent example, and steps S2105 to S2107 may be implemented as an independent example. However, it is not limited to these examples.

In some examples, steps S2101 to S2103 and steps S2105 to S2107 are optional, and one or more of these steps may be omitted or replaced in different examples.

In some examples, steps S2102, step S2103, and steps S2105 to S2107 are optional, and one or more of these steps may be omitted or replaced in different examples.

In some examples, steps S2105 to S2107 and step S2108 may be performed alternatively. In some examples, steps S2110 and S2111 may be performed alternatively. In some examples, the execution subject of steps S2105 to S2107 and step S2110 may be, for example, the LMF network element and/or the SMF network element, and the execution subject of steps S2108 and S2111 may be, for example, the base station in the communication system.

In some examples, either performing steps S2105 to S2107, or performing step S2108, may be determined according to the type of the first information. Optionally, the type of the first information may be determined based on the type of the first reference signal. In some examples, step S2110 and step S2111 may be determined according to the type of the second information. Optionally, the type of the second information may be determined based on the second reference signal.

FIG. 3a is a schematic diagram illustrating interactions of a wireless sensing method according to an example of the present invention. As illustrated in FIG. 3a, the example of the present invention relates to wireless sensing, which is performed by the first device 101. The method includes the following steps.

At step S3101, a first reference signal is acquired.

The optional implementations of step S3101 may refer to the optional implementations of step S2101 in FIG. 2a and refer to other related parts in the examples involved in FIG. 2a, which are not described in detail here.

In some examples, the first device 101 receives the first reference signal transmitted by a sensing transmitter. However, it is not limited to this and the first device 101 may also receive the first reference signal transmitted by another entity.

At step S3102, first coefficient samples corresponding to a FDT are determined.

In some examples, all the first coefficient samples corresponding to all the FDTs are determined.

The optional implementations of step S3102 may refer to the optional implementations of step S2102 in FIG. 2a and refer to other related parts in the examples involved in FIG. 2a, which are not described in detail here.

At step S3103, first information is obtained by determining one or more first coefficients corresponding to one or more FDTs based on the first coefficient samples.

In some examples, the first coefficient corresponding to each FDT is determined based on all the first coefficient samples corresponding to all the FDTs. Optionally, the first information includes the first coefficient corresponding to each FDT.

The optional implementations of step S3103 may refer to the optional implementations of step S2103 in FIG. 2a and refer to other related parts in the examples involved in FIG. 2a, which are not described in detail here.

At step S3104, the first information is transmitted.

The optional implementations of step S3104 may refer to the optional implementations of step S2104 in FIG. 2a and refer to other related parts in the examples involved in FIG. 2a, which are not described in detail here.

In some examples, the first device 101 transmits the first information to the network device 102. However, it is not limited to this, and the first device 101 may also transmit the first information to another entity.

At step S3105, second information is transmitted.

The optional implementations of step S3104 may refer to the optional implementations of step S2109 in FIG. 2a and refer to other related parts in the examples involved in FIG. 2a, which are not described in detail here.

The wireless sensing method involved in the example of the present invention may include at least one of steps S3101 to S3104. For example, step S3102 may be implemented as an independent example, step S3104 may be implemented as an independent example, step S3105 may be implemented as an independent example, steps S3102 to S3104 may be implemented as an independent example, and steps S3102 to S3103 may be implemented as an independent example. However, it is not limited to these examples.

In some examples, steps S3101 to S3103 and step S3105 are optional, and one or more of these steps may be omitted or replaced in different examples.

In some examples, steps S3101 to S3104 are optional, and one or more of these steps may be omitted or replaced in different examples.

FIG. 3b is a schematic diagram illustrating interactions of a wireless sensing method according to an example of the present invention. As illustrated in FIG. 3b, the example of the present invention relates to wireless sensing, which is performed by the first device 101. The method includes the following steps.

At step S3201, a first reference signal is acquired.

The optional implementations of step S3201 may refer to the optional implementations of step S2101 in FIG. 2a and step S3101 in FIG. 3a, and refer to other related parts in the examples involved in FIG. 2a and FIG. 3a, which are not described in detail here.

At step S3202, first information is determined.

The optional implementations of step S3201 may refer to the optional implementations of steps S2102 and S2103 in FIG. 2a and steps S3102 and S3103 in FIG. 3a, and refer to other related parts in the examples involved in FIG. 2a and FIG. 3a, which are not described in detail here.

In some examples, the first information may be determined based on the first reference signal. Optionally, the first information may be directly determined from channel frequency responses of various resource elements occupied by transmitting the first reference signal.

In some examples, the first information may be determined based on first coefficient samples corresponding to various FDTs. Optionally, the first coefficient samples may be determined based on channel frequency responses of corresponding resource element pairs.

At step S3203, the first information is transmitted.

The optional implementations of step S3203 may refer to the optional implementations of step S2104 in FIG. 2a and step S3104 in FIG. 3a, and refer to other related parts in the examples involved in FIG. 2a and FIG. 3a, which are not described in detail here.

The wireless sensing method involved in the example of the present invention may include at least one of steps S3201 to S3203. For example, step S3202 may be implemented as an independent example, step S3203 may be implemented as an independent example, steps S3201 and step S3203 may be implemented as an independent example, steps S3101 to S3102 may be implemented as an independent example. However, it is not limited to these examples.

In some examples, steps S3201 to S3202 are optional, and one or more of these steps may be omitted or replaced in different examples.

In some examples, steps S3201 and S3203 are optional, and one or more of these steps may be omitted or replaced in different examples.

In the examples of the present invention, step S3202 may be combined with step S3101, step S3104 and step S3105 in FIG. 3a, step S3203 may be combined with steps S3101 to S3103 and step S3105 in FIG. 3a, and step S3202 may also be combined with step S2101 and steps S2105 to S2107 in FIG. 2a.

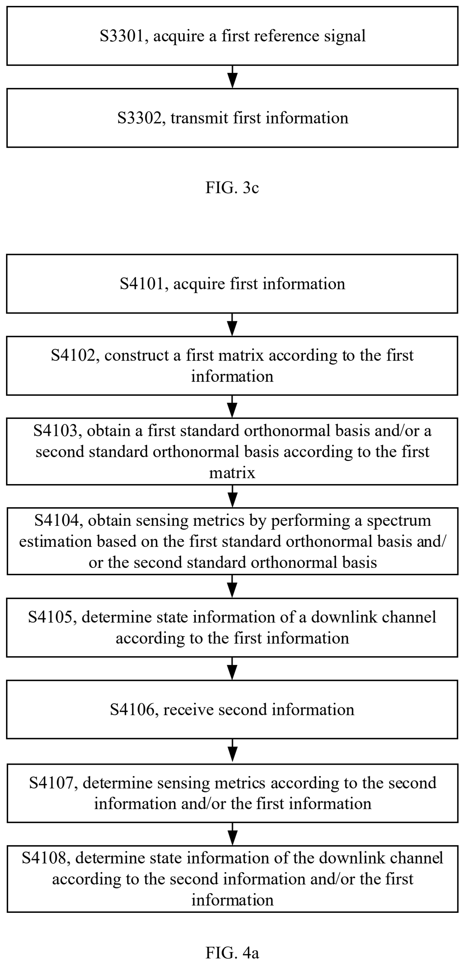

FIG. 3c is a schematic diagram illustrating interactions of a wireless sensing method according to an example of the present invention. As illustrated in FIG. 3c, the example of the present invention relates to wireless sensing, which is performed by the first device 101. The method includes the following steps.

At step S3301, a first reference signal is acquired.

The optional implementations of step S3301 may refer to the optional implementations of step S2101 in FIG. 2a, step S3101 in FIG. 3a and step S3201 in FIG. 3b, and refer to other related parts in the examples involved in FIG. 2a, FIG. 3a and FIG. 3b, which are not described in detail here.

At step S3302, first information is transmitted.

The optional implementations of step S3302 may refer to the optional implementations of step S2104 in FIG. 2a, step S3104 in FIG. 3a and step S3203 in FIG. 3b, and refer to other related parts in the examples involved in FIG. 2a, FIG. 3a and FIG. 3b, which are not described in detail here.

In some examples, the first information may be determined by the first device 101. Optionally, the first information may be determined based on the first reference signal. Optionally, it may be determined based on channel frequency responses of at least two resource elements occupied by transmitting the first reference signal.

For example, the first information is obtained by determining first coefficients corresponding to FDTs. Optionally, the first information may include one or more first coefficients corresponding to at least one FDT, for example, including the first coefficient corresponding to each FDT. Optionally, the first coefficients may be determined based on corresponding first coefficient samples. Optionally, the first coefficient samples may be determined based on channel frequency responses of corresponding resource element pairs.

In some examples, the first information may be specified by a protocol, or the first information may be obtained by the first device 101 from an upper layer. Optionally, the first information may also be determined by another entity and transmitted to the first device 101, which is not limited in the examples of the present invention.

In some examples, the first information is used by the network device to determine sensing metrics, or the first information is used by the network device to determine state information of a downlink channel.

In some examples, the first reference signal is a CSI-RS, and the first information is CSI; or, the first reference signal is a sensing reference signal, and the first information is sensing information.

In some examples, a pair of resource elements indicated by the FDT are resource elements on the same OFDM symbol.

In some examples, at least two resource elements are distributed on at least two subcarriers, one or more FDTs corresponding to the at least one first coefficient constitute a first FDT set, the first FDT set is a subset of a second FDT set, and the second FDT is determined based on a set of subcarrier positions of all resource elements occupied by the first reference signal.

In some examples, the first FDT set includes all the FDTs in the second FDT set; or the first FDT set includes the smallest N FDTs in the second FDT set; or the first FDT set includes the FDTs in the second FDT set corresponding to a longest arithmetic sequence.

In some examples, the at least two resource elements are distributed on at least two subcarriers, and one or more FDTs are determined according to counts of the subcarriers between the pair of resource elements.

In some examples, the at least one first coefficient is arranged in a first order.

In some examples, the network device includes at least one of the following: a LMF network element, a SMF network element, or a base station.

In some examples, the method includes: determining all or part of first coefficient samples corresponding to a first FDT, where each first coefficient sample corresponds to one resource element pair corresponding to the first FDT; and determining the first coefficient corresponding to the first FDT according to the all or part of first coefficient samples.

In some examples, determining all or part of first coefficient samples corresponding to the first FDT includes: determining the first coefficient samples corresponding to a first resource element pair based on channel frequency responses of two resource elements in the first resource element pair, where the first resource element pair is any resource element pair corresponding to the first FDT.

In some examples, one or more resource element pairs corresponding to the first FDT includes at least one of the following: a resource element pair consisting of two resource elements distributed on different subcarriers; at least two resource element pairs used by different transmit-receive antenna pairs; at least two resource element pairs used by different transmit-receive antenna port pairs; or at least two resource element pairs distributed on different OFDM symbols.

In some examples, the method includes: determining a second coefficient among the at least one first coefficient to be updated, and transmitting second information to the network device, where the second information includes the updated second coefficient.

The wireless sensing method involved in the example of the present invention may include at least one of steps S3301 to S3302. For example, step S3301 may be implemented as an independent example, and step S3302 may be implemented as an independent example.

In some examples, step S3301is optional, and one or more of this step may be omitted or replaced in different examples.

In the examples of the present invention, step S3302 may be combined with steps S3101 to S3103 and step S3105 in FIG. 3a, step S3302 may be combined with step S3101and step S3105 in FIG. 3a, step S3302 may be combined with step S3201and step S3202 in FIG. 3b, and step S3302 may also be combined with step S2101and steps S2105 to S2107 in FIG. 2a.

FIG. 4a is a schematic diagram illustrating interactions of a wireless sensing method according to an example of the present invention. As illustrated in FIG. 4a, the example of the present invention relates to wireless sensing, which is performed by the network device 102. The method includes the following steps.

At step S4101, first information is acquired.

The optional implementations of step S4101 may refer to the optional implementations of step S2104 in FIG. 2a, step S3104 in FIG. 3a, step S3203 in FIG. 3b, and step S3302 in FIG. 3c, and refer to other related parts in the examples involved in FIG. 2a, FIG. 3a, FIG. 3b and FIG. 3c, which are not described in detail here.

In some examples, the network device 102 receives the first information transmitted by the first device 101 but is not limited thereto, and the network device 102 may also receive the first information transmitted by another entity. Optionally, the first information may be determined by the first device 101 based on a received first reference signal.

In some examples, the network device 102 acquires the first information specified by a protocol.

In some examples, the network device 102 acquires the first information from a higher layer.

In some examples, the network device 102 performs processing to obtain second information.

Optionally, the first device 101 transmits the first information.

At step S4102, a first matrix is constructed according to the first information.

The optional implementations of step S4102 may refer to the optional implementations of step S2105 in FIG. 2a and refer to other related parts in the examples involved in FIG. 2a, FIG. 3a, FIG. 3b and FIG. 3c, which are not described in detail here.

At step S4103, a first standard orthonormal basis and/or a second standard orthonormal basis are obtained according to the first matrix.

The optional implementations of step S4103 may refer to the optional implementations of step S2106 in FIG. 2a and refer to other related parts in the examples involved in FIG. 2a, FIG. 3a, FIG. 3b and FIG. 3c, which are not described in detail here.

At step S4104, sensing metrics are obtained by performing a spectrum estimation based on the first standard orthonormal basis and/or the second standard orthonormal basis.

The optional implementations of step S4104 may refer to the optional implementations of step S2107 in FIG. 2a and refer to other related parts in the examples involved in FIG. 2a, FIG. 3a, FIG. 3b and FIG. 3c, which are not described in detail here.

At step S4105, state information of a downlink channel is determined according to the first information.

The optional implementations of step S4105 may refer to the optional implementations of step S2108 in FIG. 2a and refer to other related parts in the examples involved in FIG. 2a, FIG. 3a, FIG. 3b and FIG. 3c, which are not described in detail here.

At step S4106, second information is received.

The optional implementations of step S4106 may refer to the optional implementations of step S2109 in FIG. 2a and refer to other related parts in the examples involved in FIG. 2a, FIG. 3a, FIG. 3b and FIG. 3c, which are not described in detail here.

At step S4107, sensing metrics are determined according to the second information and/or the first information.

The optional implementations of step S4107 may refer to the optional implementations of step S2110 in FIG. 2a and refer to other related parts in the examples involved in FIG. 2a, FIG. 3a, FIG. 3b and FIG. 3c, which are not described in detail here.

At step S4108, the state information of the downlink channel is determined according to the second information and/or the first information.

The optional implementations of step S4108 may refer to the optional implementations of step S2111 in FIG. 2a and refer to other related parts in the examples involved in FIG. 2a, FIG. 3a, FIG. 3b and FIG. 3c, which are not described in detail here.

The wireless sensing method involved in the example of the present invention may include at least one of steps S4101 to S4108. For example, step S4101 may be implemented as an independent example, step S4102 may be implemented as an independent example, step S4106 may be implemented as an independent example, steps S4102 to S4104 may be implemented as an independent example, and steps S4105 to S4106 may be implemented as an independent example. However, it is not limited to these examples.

In some examples, steps S4101 to S4104 and step S4106 are optional, and one or more of these steps may be omitted or replaced in different examples.

In some examples, steps S4102 to S4106 are optional, and one or more of these steps may be omitted or replaced in different examples.

In some examples, steps S4101 and steps S4103 to S4104 are optional, and one or more of these steps may be omitted or replaced in different examples.

In some examples, steps S4102 to S4104 and step S4105 may be implemented as an either/or operation. In some examples, steps S4102 to S4104 and step S2107, and step S4105 and S4108 may be implemented as an either/or operation.

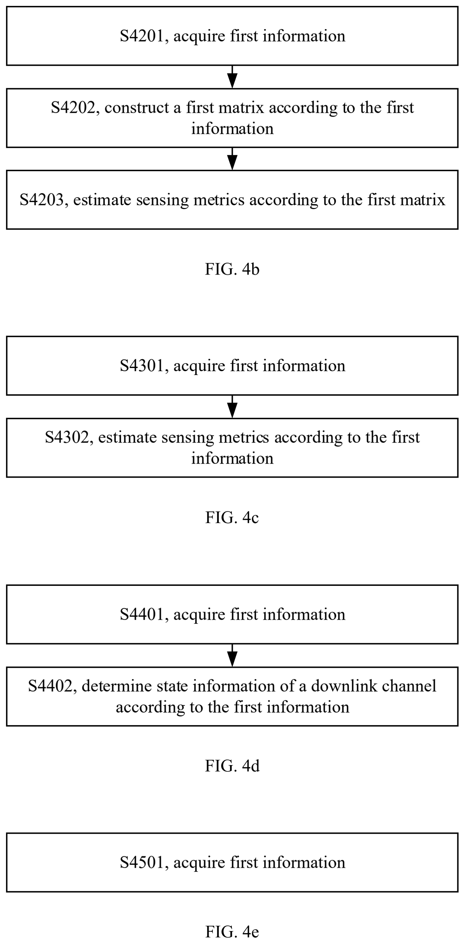

FIG. 4b is a schematic diagram illustrating interactions of a wireless sensing method according to an example of the present invention. As illustrated in FIG. 4b, the example of the present invention relates to wireless sensing, which is performed by the network device 102. The method includes the following steps.

At step S4201, first information is acquired.

The optional implementations of step S4201 may refer to the optional implementations of step S2104 in FIG. 2a, step S3104 in FIG. 3a, step S3203 in FIG. 3b, step S3302 in FIG. 3c, and step S4101 in FIG. 4a, and refer to other related parts in the examples involved in FIG. 2a, FIG. 3a, FIG. 3b, FIG. 3c and FIG. 4a, which are not described in detail here.

At step S4202, a first matrix is constructed according to the first information.

The optional implementations of step S4202 may refer to the optional implementations of step S2105 in FIG. 2a and step S4102 in FIG. 4a, and refer to other related parts in the examples involved in FIG. 2a, FIG. 3a, FIG. 3b, FIG. 3c and FIG. 4a, which are not described in detail here.

At step S4203, sensing metrics are determined according to the first matrix.

The optional implementations of step S4203 may refer to the optional implementations of step S2106 and step S2107 in FIG. 2a, and step S4103 and step S4104 in FIG. 4a, and refer to other related parts in the examples involved in FIG. 2a, FIG. 3a, FIG. 3b, FIG. 3c and FIG. 4a, which are not described in detail here.

In some examples, it may directly determine the sensing metrics according to the first matrix, instead of determining the standard orthogonal basis/basses according to the first matrix. Optionally, the network device 102 may estimate some sensing metrics without a need of determining the first standard orthonormal basis and/or the second standard orthonormal basis, and may directly determine the sensing metrics according to the first matrix. As an example, the network device 102 may derive the first matrix to determine the sensing metrics, which is not limited by the examples of the present invention.

The wireless sensing method involved in the example of the present invention may include at least one of steps S4201 to S4203. For example, step S4201 may be implemented as an independent example, step S4202 may be implemented as an independent example, step S4203 may be implemented as an independent example, steps S4202 to S4203 may be implemented as an independent example, and steps S4201 to S4202 may be implemented as an independent example. However, it is not limited to these examples.

In some examples, steps S4202 to S4203 are optional, and one or more of these steps may be omitted or replaced in different examples.

In some examples, steps S4201 and step S4202 are optional, and one or more of these steps may be omitted or replaced in different examples.

In the examples of the present invention, step S4203 may be combined with step S4101 and step S4102 in FIG. 4a, step S4201 and step S4203 may be combined with steps S4106 to S4107 in FIG. 4a, and steps S4201 to S4203 may also be combined with step S4106 and step S4108 in FIG. 4a.

FIG. 4c is a schematic diagram illustrating interactions of a wireless sensing method according to an example of the present invention. As illustrated in FIG. 4c, the example of the present invention relates to wireless sensing, which is performed by the network device 102. The method includes the following steps.

At step S4301, first information is acquired.

The optional implementations of step S4301 may refer to the optional implementations of step S2104 in FIG. 2a, step S3104 in FIG. 3a, step S3203 in FIG. 3b, step S3302 in FIG. 3c, step S4101 in FIG. 4a, and step S4201 in FIG. 4b, and refer to other related parts in the examples involved in FIG. 2a, FIG. 3a, FIG. 3b, FIG. 3c, FIG. 4a and FIG. 4b, which are not described in detail here.

In some examples, the first information may be sensing information. Optionally, the sensing information may be determined by the first device 101 based on a sensing reference signal.

At step S4302, sensing metrics are determined according to the first information.

The optional implementations of step S4302 may refer to the optional implementations of steps S2105 to S2107 in FIG. 2a, steps S4102 to S4103 in FIG. 4a, and step S4201 and step S4202 in FIG. 4b, and refer to other related parts in the examples involved in FIG. 2a, FIG. 3a, FIG. 3b, FIG. 3c, FIG. 4a and FIG. 4b, which are not described in detail here.

In some examples, the sensing metrics may be estimated directly based on one or more first coefficients corresponding to at least one FDT included in the first information. Optionally, it may determine standard orthogonal bases of a signal subspace and a noise subspace separately based on the size of the first coefficients corresponding to various FDTS, and determine the sensing metrics according to the standard orthogonal bases of the signal subspace and the noise subspace. In this case, there is no need to construct the first matrix according to the first information.

The wireless sensing method involved in the example of the present invention may include at least one of steps S4301 to S4302. For example, step S4301 may be implemented as an independent example, and step S4302 may be implemented as an independent example.

In some examples, step S4301 is optional, and one or more of this step may be omitted or replaced in different examples.

In some examples, step S4302 is optional, and one or more of this step may be omitted or replaced in different examples.

In the examples of the present invention, steps S4301 to S4302 may be combined with steps S4106 to S4107 in FIG. 4a, and steps S4301 to S4302 may also be combined with step S4106 and step S4108 in FIG. 4a.

FIG. 4d is a schematic diagram illustrating interactions of a wireless sensing method according to an example of the present invention. As illustrated in FIG. 4d, the example of the present invention relates to wireless sensing, which is performed by the network device 102. The method includes the following steps.

At step S4401, first information is acquired.

The optional implementations of step S4401 may refer to the optional implementations of step S2104 in FIG. 2a, step S3104 in FIG. 3a, step S3203 in FIG. 3b, step S3302 in FIG. 3c, step S4101 in FIG. 4a, step S4201 in FIG. 4b and step S4301 in FIG. 4c, and refer to other related parts in the examples involved in FIG. 2a, FIG. 3a, FIG. 3b, FIG. 3c, FIG. 4a, FIG. 4b and FIG. 4c, which are not described in detail here.

At step S4402, state information of a downlink channel is determined according to the first information.

The optional implementations of step S4402 may refer to the optional implementations of steps S2105 to S2107 in FIG. 2a, steps S4102 to S4103 in FIG. 4a, and step S4201 and step S4202 in FIG. 4b, and refer to other related parts in the examples involved in FIG. 2a, FIG. 3a, FIG. 3b, FIG. 3c, FIG. 4a, FIG. 4b and FIG. 4c, which are not described in detail here.

In some examples, the first information may be CSI. Optionally, the CSI may be determined by the first device 101 based on a CSI-RS.

The wireless sensing method involved in the example of the present invention may include at least one of steps S4401 to S4402. For example, step S4401 may be implemented as an independent example, and step S4402 may be implemented as an independent example.

In some examples, step S4401 is optional, and one or more of this step may be omitted or replaced in different examples.

In some examples, step S4402 is optional, and one or more of this step may be omitted or replaced in different examples.

In the examples of the present invention, steps S4401 to S4402 may be combined with steps S4106 to S4107 in FIG. 4a, and steps S4401 to S4402 may also be combined with step S4106 and step S4108 in FIG. 4a.

FIG. 4e is a schematic diagram illustrating interactions of a wireless sensing method according to an example of the present invention. As illustrated in FIG. 4d, the example of the present invention relates to wireless sensing, which is performed by the network device 102. The method includes the following steps.

At step S4501, first information is acquired.

The optional implementations of step S4401 may refer to the optional implementations of step S2104 in FIG. 2a, step S3104 in FIG. 3a, step S3203 in FIG. 3b, step S3302 in FIG. 3c, step S4101 in FIG. 4a, step S4201 in FIG. 4b, step S4301 in FIG. 4c and step S4401 of FIG. 4d, and refer to other related parts in the examples involved in FIG. 2a, FIG. 3a, FIG. 3b, FIG. 3c, FIG. 4a, FIG. 4b, FIG. 4c and FIG. 4d, which are not described in detail here.

In some examples, the method includes: determining sensing metrics according to the first information, or determining state information of a downlink channel according to the first information.

In some examples, the first reference signal is a CSI-RS, and the first information is CSI; or, the first reference signal is a sensing reference signal, and the first information is sensing information.

In some examples, a pair of resource elements indicated by the FDT are resource elements on the same OFDM symbol.

In some examples, at least two resource elements are distributed on at least two subcarriers, one or more FDTs corresponding to at least one first coefficient constitute a first FDT set, the first FDT set is a subset of a second FDT set, and the second FDT is determined based on a set of subcarrier positions of all resource elements occupied by the first reference signal.

In some examples, the first FDT set includes all the FDTs in the second FDT set; or the first FDT set includes the smallest N FDTs in the second FDT set; or the first FDT set includes the FDTs in the second FDT set corresponding to a longest arithmetic sequence.

In some examples, the at least two resource elements are distributed on at least two subcarriers, and a FDT is determined according to counts of the subcarriers between a pair of resource elements.

In some examples, the at least one first coefficient is arranged in a first order.

In some examples, the network device includes at least one of the following: a LMF network element, a SMF network element, or a base station.

In some examples, determining the sensing metrics according to the first information includes: constructing a first matrix according to one or more first coefficients corresponding to at least one FDT; and determining the sensing metrics according to the first matrix.

In some examples, determining the sensing metrics according to the first matrix includes: determining, according to the first matrix, a standard orthonormal basis of a noise subspace as a first standard orthonormal basis, and/or a standard orthonormal basis of a signal subspace as a second standard orthonormal basis; and obtaining the sensing metrics by performing a spectrum estimation based on the first standard orthonormal basis and/or the second standard orthonormal basis.

In some examples, determining, according to the first matrix, the standard orthonormal basis of the noise subspace as the first standard orthonormal basis, and/or the standard orthonormal basis of the signal subspace as the second standard orthonormal basis includes: obtaining the first standard orthonormal basis and/or the second standard orthonormal basis by performing an EVD on the first matrix.

In some examples, the sensing metrics are MUSIC metrics.

In some examples, the MUSIC metrics are expressed as: $P(m) = \dfrac{1}{\mathbf{v}^H(m)\mathbf{U}_n\mathbf{U}_n^H\mathbf{v}(m)}$ , or

$P(m) = \dfrac{1}{\mathbf{v}^H(m)(\mathbf{I}_{|\mathcal{F}|} - \mathbf{U}_s\mathbf{U}_s^H)\mathbf{v}(m)}$ ; where $\mathbf{v}(m) = \begin{bmatrix} 1 & e^{-j\frac{2\pi}{N_{\text{FFT}}}f_1 m} & e^{-j\frac{2\pi}{N_{\text{FFT}}}f_2 m} & \dots & e^{-j\frac{2\pi}{N_{\text{FFT}}}f_{|\mathcal{F}|} m} \end{bmatrix}^T$ , de-

notes values of MUSIC metrics with a delay of m sampling points, v(m) denotes a scan vector with a delay of m sampling points, $N_{\text{FFT}}$ denotes counts of FFT points, $|\mathcal{F}|$ denotes counts of the at least one FDT, $f_n$ denotes a value of the n-th FDT among the at least one FDT, superscript T denotes a transpose of a matrix, superscript H denotes a conjugate transpose of a matrix, $\mathbf{U}_n$ denotes the first standard orthonormal basis, $\mathbf{U}_s$ denotes the second standard orthonormal basis, $\mathbf{I}_{|\mathcal{F}|}$ denotes an identity matrix with its size being $|\mathcal{F}| \times |\mathcal{F}|$, and j denotes an imaginary unit, that is, a square root of -1.

In some examples, the first matrix is a Hermitian Toeplitz matrix.

In some examples, the method includes: receiving second information transmitted by the first device, where the second information is transmitted by the first device in the case of determining a second coefficient among the at least one first coefficient to be updated, and the second information includes the updated second coefficient.

In the examples of the present invention, step S4501 may be combined with step S4302 in FIG. 4c, and step S4501 may also be combined with step S4402 in FIG. 4d. However, it is not limited to these examples.

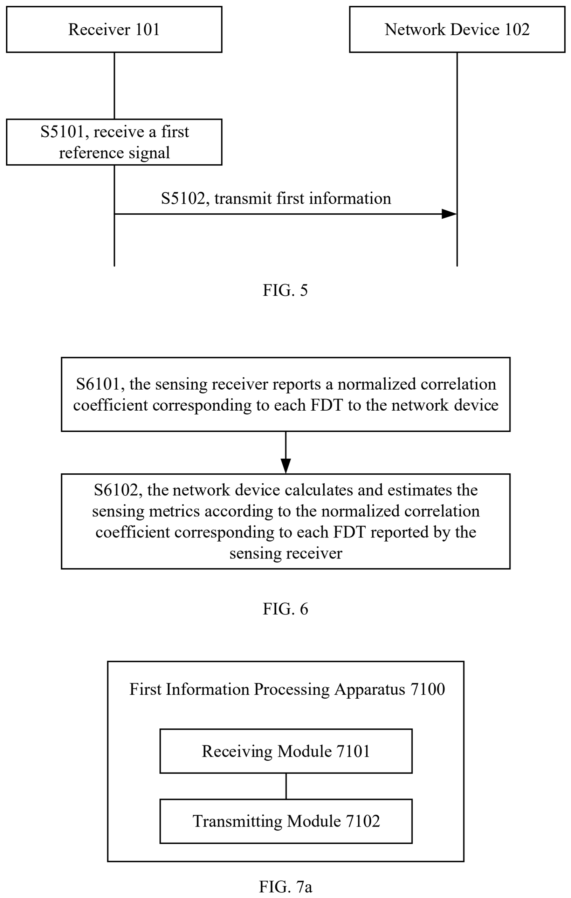

FIG. 5 is a schematic diagram illustrating interactions of a wireless sensing method according to an example of the present invention. As illustrated in FIG. 5, the example of the present invention relates to wireless sensing, which is applicable to the communication system 100. The method includes the following steps.

At step S5101, the first device 101 receives a first reference signal.

The optional implementations of step S5101 may refer to the optional implementations of step S2101 in FIG. 2a, step S3101 in FIG. 3a, step S3202 in FIG. 3b, and step S3301 in FIG. 3c, and refer to other related parts in the examples involved in FIG. 2a, FIG. 3a, FIG. 3b, FIG. 3c, FIG. 4a, FIG. 4b, FIG. 4c and FIG. 4d, which are not described in detail here.

At step S5102, the first device 101 transmits first information.

The optional implementations of step S5102 may refer to the optional implementations of step S2104 in FIG. 2a, step S3104 in FIG. 3a, step S3203 in FIG. 3b, step S3302 in FIG. 3c, step S4101 in FIG. 4a, step S4201 in FIG. 4b, step S4301 in FIG. 4c and step S4401 in FIG. 4d, and refer to other related parts in the examples involved in FIG. 2a, FIG. 3a, FIG. 3b, FIG. 3c, FIG. 4a, FIG. 4b, FIG. 4c, FIG. 4d and FIG. 4e, which are not described in detail here.

FIG. 6 is a schematic diagram illustrating interactions of a wireless sensing method according to an example of the present invention. As illustrated in FIG. 6, the example of the present invention relates to wireless sensing method, which includes the following steps.

At step S6101, a sensing receiver reports a first coefficient corresponding to each FDT to the network device.

Optionally, the network device may be, for example, a network unit (such as a LMF and a SMF) used for sensing calculation and management in a core network.

The FDT is a positive integer used to describe a frequency domain distance between a pair of resource elements of a sensing reference signal.

Without loss of generality, subcarrier positions of the sensing reference signal are denoted as set $\mathcal{K}$. Thus, the

sensing receiver may calculate a FDT set $\mathcal{F}$ based on set $\mathcal{K}$, where $\mathcal{F}$ = {$k_i$ - $k_j$ | $k_i$ > $k_j$;$k_i$,$k_j$ ∈ $\mathcal{K}$}.

The sensing receiver calculates one first frequency domain channel coefficient for each FDT, which is denoted as

set $\mathcal{C} = \left\{ c_f \triangleq \mathbb{E}\left[\dfrac{H_k H_{k+f}^*}{|H_k| \cdot |H_{k+f}|}\right] \mid k \in \mathcal{K}, f \in \mathcal{F}, k+f \in \mathcal{K} \right\}$, where $H_k$ is a channel frequency response on subcarrier *k,* with $k \in \mathcal{K}$; and $\mathbb{E}[\cdot]$ denotes a mathematical expectation operator, which represents a statistical average of a plurality of first frequency domain channel coefficient samples corresponding to the same FDT.

The plurality of first frequency domain channel coefficient samples corresponding to the same FDT include at least one of the following cases: the first frequency domain channel coefficient corresponding to a plurality of pairs of subcarriers with the same FDT; the first frequency domain channel coefficient corresponding to different transmit-receive antenna pairs or antenna port pairs with the same FDT; or the first frequency domain channel coefficient corresponding to the sensing reference signal transmitted in different time units.

To avoid confusing the order, the first frequency domain channel coefficients (i.e., the elements in set $\mathcal{C}$ are to be reported in an order (in a form of a sequence). For example, they are arranged in an ascending or descending order according to their corresponding FDTs.

At step S6102, the network device calculates and estimates the sensing metric according to the first coefficient corresponding to each FDT reported by the sensing receiver.

Optionally, the sensing metrics may include, for example, timing and distance, etc.

Based on the reported first frequency domain channel coefficients, i.e., $\mathcal{C}$ = {$c_{f_1}$, $c_{f_2}$,..., $c_{f_{|\mathcal{F}|-1}}$, $c_{f_{|\mathcal{F}|}}$}, the network unit used for the sensing calculation and management in the core network (such as the LMF and the SMF) constructs a Hermitian Toeplitz matrix $\mathbf{R}$, as follows:

$$\mathbf{R} \triangleq \begin{bmatrix} 1 & c_{f_1}^* & \cdots & c_{f_{|\mathcal{F}|-1}}^* & c_{f_{|\mathcal{F}|}}^* \\ c_{f_1} & 1 & \cdots & c_{f_{|\mathcal{F}|-2}} & c_{f_{|\mathcal{F}|-1}} \\ \vdots & \vdots & \ddots & \vdots & \vdots \\ c_{f_{|\mathcal{F}|-1}} & c_{f_{|\mathcal{F}|-2}} & \cdots & 1 & c_{f_1}^* \\ c_{f_{|\mathcal{F}|}} & c_{f_{|\mathcal{F}|-1}} & \cdots & c_{f_1} & 1 \end{bmatrix},$$

where 0 < $f_1$ < $f_2$ < ⋯ < $f_{|\mathcal{F}|-1}$ < $f_{|\mathcal{F}|}$, and $|\mathcal{F}|$ denotes the counts of elements in the set.

Assuming that the network unit used for the sensing calculation and management (such as the LMF and the SMF) adopts a MUSIC spectrum estimation algorithm, an orthogonal basis of a noise subspace $U_n$ may be obtained by performing an EVD on matrix $\mathbf{R}$, that is: $\mathbf{R} = \begin{bmatrix} \mathbf{U}_s & \mathbf{U}_n \end{bmatrix} \begin{bmatrix} \mathbf{\Lambda}_s & \\ & \mathbf{\Lambda}_n \end{bmatrix} \begin{bmatrix} \mathbf{U}_s^H \\ \mathbf{U}_n^H \end{bmatrix}$.

Particularly, $\mathbf{U}_s$ and $\mathbf{U}_n$ denote the standard orthogonal bases of the signal subspace and the noise subspace, respectively, and $\Lambda_s$ and $\Lambda_n$ denote the corresponding eigen values, respectively.

Then, the network units used for the sensing calculation and management (such as the LMF and the SMF) may perform the spectrum estimation. Taking the MUSIC spectrum estimation as an example, its MUSIC metrics may be expressed as:

$$P(m) = \frac{1}{\mathbf{v}^H(m)\mathbf{U}_n\mathbf{U}_n^H\mathbf{v}(m)},$$

where $\mathbf{v}(m) = \begin{bmatrix} 1 & e^{-j\frac{2\pi}{N_{\mathrm{FFT}}}f_1 m} & e^{-j\frac{2\pi}{N_{\mathrm{FFT}}}f_2 m} & \cdots & e^{-j\frac{2\pi}{N_{\mathrm{FFT}}}f_{|\mathcal{F}|} m} \end{bmatrix}^T$ represents a scan vector corresponding to a time delay of m sampling points, and $N_{\mathrm{FFT}}$ denotes the counts of FFT points corresponding to an OFDM system.

It may be understood that the aforementioned methods mainly involve reporting the sensing data. In some examples, it may further be extended to reporting CSI.

Optionally, in a sensing system, the sensing receiver receives and measures the sensing reference signal transmitted by the sensing transmitter, and reports the sensing information, such as the first information, to the network device such as the LMF or the SMF. The network device use this to calculate the sensing metrics.

In a communication system, UE or a terminal receives and measures the CSI-RS transmitted by the base station and reports the CSI to the base station. Based on this, the base station calculates state information of a downlink channel, such as time domain precoding information.

In some examples, the specific correspondence between the communication system and the sensing system may be as follows.

Optionally, the sensing transmitter in the sensing system may be equivalent to the base station in the communication system.

Optionally, the sensing receiver in the sensing system may be equivalent to UE in the communication system.

Optionally, the sensing reference signal in the sensing system may be equivalent to the CSI-RS or a TRS in the communication system.

Optionally, the sensing receiver reports the sensing information to the network device such as the LMF or the SMF in the sensing system, which is equivalent to that the UE reports the CSI to the base station in the communication system.

In the examples of the present invention, some or all of the steps and their optional implementations may be arbitrarily combined with some or all of the steps in other examples, or may be arbitrarily combined with the optional implementations in other examples.

The examples of the present invention also provide an apparatus for implementing any of the aforementioned methods. For example, an apparatus is provided, including units for implementing various steps performed by the terminal in any of the aforementioned methods. For another example, another device is also provided, including units for implementing various steps performed by the network device (such as a receiver, a transmitter, a sensing object, an access network device, a core network function node, and a core network device) in any of the aforementioned methods.

It is to be understood that the division of various units in the apparatuses is only a division based on logical functions, and in actual implementation, they may be fully or partially integrated into one physical entity, or may be physically separated. In addition, the units in the apparatuses may be implemented in a form of a processor calling software. For example, the apparatus includes a processor, the processor is connected to a memory, the memory stores computer instructions, and the processor calls the computer instructions stored in the memory to implement any of the aforementioned methods or implement the functions of various units of the apparatuses. Particularly, the processor is, for example, a general-purpose processor, such as a central processing unit (CPU) or a microprocessor, and the memory is a memory inside the apparatus or a memory outside the apparatus. Alternatively, the units in the apparatuses may implemented in a form of a hardware circuit, and the functions of some or all of the units may be implemented by designing the hardware circuit. The hardware circuit may be understood as one or more processors. For example, in one implementation, the hardware circuit is an application-specific integrated circuit (ASIC), and the functions of some or all of the units are implemented by designing the logical relationship between the components within the circuit. For another example, in another implementation, the hardware circuit may be implemented by a programmable logic device (PLD), which, by taking a field programmable gate array (FPGA) as an example, may include a large number of logic gate circuits, and implement the functions of some or all of the units by configuring connection relationship between the logic gate circuits through a configuration file. All units of the apparatuses may be implemented entirely in the form of software called by the processor, or entirely in the form of the hardware circuit, or partially in the form of software called by the processor and the rest in the form of the hardware circuit.

In the examples of the present invention, the processor is a circuit with signal processing capabilities. In an implementation, the processor may be a circuit with instruction reading and execution capabilities, such as a CPU, a microprocessor, a graphics processing unit (GPU) (which may be understood as a microprocessor), or a digital signal processor (DSP). In another implementation, the processor may implement certain functions through the logical relationship of the hardware circuit. The logical relationship of the hardware circuit is fixed or reconfigurable, for example, the processor is a hardware circuit implemented by the ASIC or the PLD, such as the FPGA. In the reconfigurable hardware circuit, the process that the processor loads a configuration document to implement the hardware circuit configuration may be understood as a process that the processor loads instructions to implement the functions of some or all of the units. In addition, it may also be a hardware circuit designed for artificial intelligence, which may be understood as an ASIC, such as a neural network processing unit (NPU), a tensor processing unit (TPU), and a deep-learning processing unit (DPU).

FIG. 7a is a schematic diagram of a structure of a first information processing apparatus provided in an example of the present invention. As illustrated in FIG. 7a, the first information processing apparatus 7100 includes: a receiving module 7101 that is configured to receive a first reference signal that occupies at least two resource elements; and a transmitting module 7102 that is configured to transmit first information to a network device, where the first information includes at least one first coefficient, each first coefficient corresponds to a FDT, and the FDT indicates a frequency domain distance between a pair of resource elements.

Optionally, the receiving module 7101 is configured to perform the steps related to the first reference signal reception performed by the first device in any of the aforementioned methods, which are not described in detail here. Optionally, the transmitting module 7102 is configured to perform the steps related to first information transmission performed by the first device in any of the aforementioned methods, which are not described in detail here. Optionally, the first information processing apparatus 7100 further includes a determining module. The determining module is configured to perform the steps related to information determination performed by the first device in any of the aforementioned methods, such as determining the first information and the second information, which are not described in detail here.

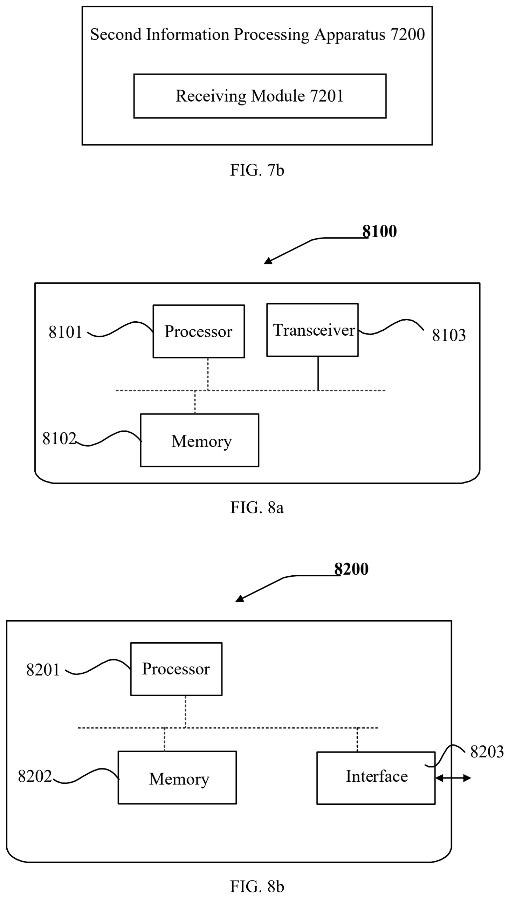

FIG. 7b is a schematic diagram of a structure of a second information processing apparatus provided in an example of the present invention. As illustrated in FIG. 7b, the second information processing apparatus 7200 includes: a receiving module 7201 that is configured to receive first information transmitted by a first device, where the first information includes at least one first coefficient, each first coefficient corresponds to a FDT, and the FDT indicates a frequency domain distance between a pair of resource elements, and where the first information is determined by the first device through receiving a first reference signal, and the first reference signal occupies at least two resource elements. Optionally, the receiving module 7201 is configured to perform the steps related to information reception performed by the network device in any of the aforementioned methods, which are not described in detail here. The second information processing apparatus 7200 also includes a transmitting module and/or a processing module. The processing module is configured to perform the steps related to information processing performed by the network device in any of the aforementioned methods, and the transmitting module is configured to perform the steps related to information transmission performed by the network device in any of the aforementioned methods, which are not described in detail here.

FIG. 8a is a schematic diagram of a structure of a communication device 8100 provided in an example of the present invention. The communication device 8100 may be a network device (such as an access network device and a core network device), or a terminal (such as UE), or a chip, a chip system, or a processor that supports the network device to implement any of the aforementioned methods, or a chip, a chip system, or a processor that supports the terminal to implement any of the aforementioned methods. The communication device 8100 may be configured to implement the methods described in the aforementioned method examples, whose details may refer to the descriptions in the aforementioned method examples.

As illustrated in FIG. 8a, the communication device 8100 includes one or more processors 8101. The processor 8101 may be a general-purpose processor or a special-purpose processor, for example, being a baseband processor or a central processor. The baseband processor may be configured to process communication protocols and communication data, and the central processor may be configured to control a communication apparatus (such as a base station, a baseband chip, a terminal device, a terminal device chip, a DU or a CU) to perform a program and process data of the program. The processor 8101 is configured to call instructions to cause the communication device 8100 to perform any of the aforementioned methods.

In some examples, the communications device 8100 also includes one or more memories 8102 for storing instructions. Optionally, all or part of the memories 8102 may be located outside the communication device 8100.

In some examples, the communication device 8100 also includes one or more transceivers 8103. When the communication device 8100 includes the one or more transceivers 8103, the communication steps such as transmitting and receiving in the aforementioned methods are performed by the transceiver 8103, and the other steps are performed by the processor 8101.

In some examples, the transceiver may include a receiver and a transmitter. The receiver and the transmitter may be separate or integrated. Optionally, terms such as transceiver, transceiving unit, transceiving machine, and transceiving circuit may be interchanged with each other, terms such as transmitter, transmitting unit, transmitting machine, and transmitting circuit may be interchanged with each other, and terms such as receiver, receiving unit, receiving machine, and receiving circuit may be interchanged with each other.

Optionally, the communication device 8100 further includes one or more interface circuits 8104, which are connected to the one or more memories 8102. The interface circuit 8104 may be configured to receive signals from the one or more memories 8102 or other apparatuses, and may be configured to transmit signals to the one or more memories 8102 or other apparatuses. For example, the interface circuit 8104 may read instructions stored in the one or more memories 8102 and transmit the instructions to the one or more processors 8101.

The communication device 8100 described in the example may be the network device or the terminal. However, the scope of the communication device 8100 described in the present invention is not limited thereto, and the structure of the communication device 8100 may not be limited by FIG. 8a. The communication device may be a stand-alone device or may be a part of a larger device. For example, the communication device may be: 1) an independent integrated circuit (IC), or a chip, or a chip system or subsystem; (2) a collection of one or more ICs, optionally, the IC collection may also include a storage component for storing data and programs; (3) an ASIC, such as a modem; (4) a module that may be embedded in another device; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others; etc.

FIG. 8b is a schematic diagram of a structure of a chip 8200provided in an example of the present invention. For the case where the communication device 8100 may be a chip or a chip system, it may make reference to the schematic diagram of a structure of a chip 8200 illustrated in FIG. 8b, but is not limited thereto.

The chip 8200 includes one or more processors 8201. The processor 8201 is configured to call instructions to cause the chip 8200 to perform any of the aforementioned methods.

In some examples, the chip 8200 further includes one or more interface circuits 8202, which are connected to one or more memories 8203. The interface circuit 8202 may be configured to receive signals from the one or more memories 8203 or other apparatuses, and may be configured to transmit signals to the one or more memories 8203 or other apparatuses. For example, the interface circuit 8202 may read instructions stored in the one or more memories 8203 and transmit the instructions to the one or more processors 8201. Optionally, terms such as interface circuit, interface, transceiver pin, and transceiver may be interchanged with each other.

In some examples, the chip 8200 also includes the one or more memories 8203 for storing instructions. Optionally, all or part of the memories 8203 may be located outside the chip 8200.

The present invention also provides a storage medium having instructions stored. The instructions, when executed on the communication device 8100, cause the communication device 8100 to perform any of the aforementioned methods. Optionally, the storage medium is an electronic storage medium. Optionally, the storage medium is a computer-readable storage medium. However, it is not limited thereto, and may be a storage medium readable by other apparatuses. Optionally, the storage medium may be a non-transitory storage medium. However, it is not limited thereto, and may be a transient storage medium.

The present invention also provides a program product. The program produce, when executed by the communication device 8100, causes the communication device 8100 to perform any of the aforementioned methods. Optionally, the program product is a computer program product.

The present invention also provides a computer program. The computer program, when executed on a computer, causes the computer to perform any of the aforementioned methods.

**Claims**

1. An information processing method, performed by a first device, comprising:

   receiving a first reference signal that occupies at least two resource elements; and
   transmitting first information to a network device, wherein the first information comprises at least one first coefficient, each first coefficient corresponds to one frequency domain tag, FDT, and the FDT indicates a frequency domain distance between a pair of resource elements.

2. The method according to claim 1, wherein the first information is used by the network device to determine sensing metrics or to determine state information of a downlink channel.

3. The method according to any one of claims 1-2, wherein

   the first reference signal is a channel state information reference signal, CSI-RS, and the first information is channel state information, CSI; or
   the first reference signal is a sensing reference signal, and the first information is sensing information.

4. The method according to any one of claims 1-3, wherein the pair of resource elements indicated by the FDT are resource elements on one orthogonal frequency division multiplexing, OFDM, symbol.

5. The method according to any one of claims 1-4, wherein the at least two resource elements are distributed on at least two subcarriers, one or more FDTs corresponding to the at least one first coefficient constitute a first FDT set, the first FDT set is a subset of a second FDT set, and the second FDT is determined based on a set of subcarrier positions of all resource elements occupied by the first reference signal.

6. The method according to claim 5,

   wherein the first FDT set comprises all FDTs in the second FDT set; or
   the first FDT set comprises smallest N FDTs in the second FDT set; or
   the first FDT set comprises FDTs in the second FDT set corresponding to a longest arithmetic sequence; and
   wherein N is a positive integer.

7. The method according to claims 1-6, wherein the at least two resource elements are distributed on at least two subcarriers, and the FDT is determined according to counts of subcarriers between the pair of resource elements.

8. The method according to any one of claims 1-7, wherein the at least one first coefficient is arranged in a first order.

9. The method according to any one of claims 1-8, wherein the network device comprises at least one of the following:

   a location management function, LMF, network element,
   a sensing management function, SMF, network element, or
   a base station.

10. The method according to any one of claims 1-9, the method comprising:

    determining all or part of first coefficient samples corresponding to a first FDT, wherein each first coefficient sample corresponds to one resource element pair corresponding to the first FDT; and
    determining the first coefficient corresponding to the first FDT based on the all or part of first coefficient samples.

11. The method according to claim 10, wherein determining the all or part of first coefficient samples corresponding to the first FDT comprises:
    determining the first coefficient samples corresponding to a first resource element pair based on channel frequency responses of two resource elements in the first resource element pair, wherein the first resource element pair is any resource element pair corresponding to the first FDT.

12. The method according to claim 11, wherein one or more resource element pairs corresponding to the first FDT comprises at least one of the following:

    a resource element pair consisting of two resource elements distributed on different subcarriers;
    at least two resource element pairs used by different transmit-receive antenna pairs;
    at least two resource element pairs used by different transmit-receive antenna port pairs; or
    at least two resource element pairs distributed on different orthogonal frequency division multiplexing, OFDM, symbols.

13. The method according to any one of claims 1-12, the method comprising:

    determining a second coefficient among the at least one first coefficient to be updated, and
    transmitting second information to the network device, wherein the second information comprises an updated second coefficient.

14. An information processing method, performed by a network device, comprising:

    receiving first information transmitted by a first device,
    wherein the first information comprises at least one first coefficient, each first coefficient corresponds to one frequency domain tag, FDT, and the FDT indicates a frequency domain distance between a pair of resource elements, and
    wherein the first information is determined by the first device through receiving a first reference signal, and the first reference signal occupies at least two resource elements.

15. The method according to claim 14, the method comprising:

    determining sensing metrics according to the first information, or
    determining state information of a downlink channel according to the first information.

16. The method according to any one of claims 14-15, wherein

    the first reference signal is a channel state information reference signal, CSI-RS, and the first information is channel state information, CSI; or
    the first reference signal is a sensing reference signal, and the first information is sensing information.

17. The method according to any one of claims 14-16, wherein the pair of resource elements indicated by the FDT are resource elements on one orthogonal frequency division multiplexing, OFDM, symbol.

18. The method according to any one of claims 14-17, wherein the at least two resource elements are distributed on at least two subcarriers, one or more FDTs corresponding to the at least one first coefficient constitute a first FDT set, the first FDT set is a subset of a second FDT set, and the second FDT is determined based on a set of subcarrier positions of all resource elements occupied by the first reference signal.

19. The method according to claim 18,

wherein the first FDT set comprises all FDTs in the second FDT set; or
the first FDT set comprises smallest N FDTs in the second FDT set; or
the first FDT set comprises FDTs in the second FDT set corresponding to a longest arithmetic sequence; and
wherein N is a positive integer.

20. The method according to any one of claims 14-19, wherein the at least two resource elements are distributed on at least two subcarriers, and the FDT is determined according to counts of subcarriers between the pair of resource elements.

21. The method according to any one of claims 14-20, wherein the at least one first coefficient is arranged in a first order.

22. The method according to any one of claims 14-21, wherein the network device comprises at least one of the following:

a location management function, LMF, network element,
a sensing management function, SMF, network element, or
a base station.

23. The method according to any one of claims 15-22, wherein determining the sensing metrics according to the first information comprises:

constructing a first matrix according to one or more first coefficients corresponding to at least one FDT; and
determining the sensing metrics according to the first matrix.

24. The method according to claims 23, wherein determining the sensing metrics according to the first matrix comprises:

determining, according to the first matrix, a standard orthonormal basis of a noise subspace as a first standard orthonormal basis, and/or a standard orthonormal basis of a signal subspace as a second standard orthonormal basis; and
obtaining the sensing metrics by performing a spectrum estimation based on the first standard orthonormal basis and/or the second standard orthonormal basis.

25. The method according to claim 24, wherein determining, according to the first matrix, the standard orthonormal basis of the noise subspace as the first standard orthonormal basis, and/or the standard orthonormal basis of the signal subspace as the second standard orthonormal basis comprises:
obtaining the first standard orthonormal basis and/or the second standard orthonormal basis by performing an eigen value decomposition, EVD, on the first matrix.

26. The method according to any one of claims 23-25, wherein the sensing metrics are multiple signal classification, MUSIC, metrics.

27. The method according to claim 26, wherein the MUSIC metrics are expressed as: $P(m) = \frac{1}{\mathbf{v}^H(m)\mathbf{U}_n\mathbf{U}_n^H\mathbf{v}(m)}$, or

$P(m) = \frac{1}{\mathbf{v}^H(m)(\mathbf{I}_{|\mathcal{F}|} - \mathbf{U}_s\mathbf{U}_s^H)\mathbf{v}(m)}$; wherein $\mathbf{v}(m) = \left[1 \quad e^{-j\frac{2\pi}{N_{\text{FFT}}}f_1 m} \quad e^{-j\frac{2\pi}{N_{\text{FFT}}}f_2 m} \quad ... \quad e^{-j\frac{2\pi}{N_{\text{FFT}}}f_{|\mathcal{F}|} m}\right]^T$,

P(m) denotes values of the MUSIC metrics with a delay of m sampling points, v(m) denotes a scan vector with a delay of m sampling points, $N_{\text{FFT}}$ denotes counts of fast Fourier transform, FFT, points, $|\mathcal{F}|$ denotes counts of the at least one

FDT, $f_n$ denotes a value of a n-th FDT among the at least one FDT, superscript T denotes a transpose of a matrix, superscript H denotes a conjugate transpose of a matrix, $\mathbf{U}_n$ is the first standard orthonormal basis, $\mathbf{U}_s$ is the second standard orthonormal basis, $\mathbf{I}_{|\mathcal{F}|}$ is an identity matrix with its size being $|\mathcal{F}| \times |\mathcal{F}|$, and j is an imaginary unit, that is, a square root of -1.

28. The method according to any one of claims 23-27, wherein the first matrix is a Hermitian Toeplitz matrix.

29. The method according to any one of claims 14-28, the method comprising:
receiving second information transmitted by the first device, wherein the second information is transmitted by the first device in a case of determining a second coefficient among the at least one first coefficient to be updated, and the second information comprises an updated second coefficient.

30. An information processing method, being applicable to a communication system that comprises a first device and a network device, the method comprising:

receiving, by the first device, a first reference signal that occupies at least two resource elements; and
transmitting, by the first device, first information to the network device, wherein the first information comprises at least one first coefficient, each first coefficient corresponds to one frequency domain tag, FDT, and the FDT indicates a frequency domain distance between a pair of resource elements.

31. A first information processing apparatus, comprising:

a receiving module, configured to receive a first reference signal that occupies at least two resource elements; and
a transmitting module, configured to transmit first information to a network device, wherein the first information comprises at least one first coefficient, each first coefficient corresponds to one frequency domain tag, FDT, and the FDT indicates a frequency domain distance between a pair of resource elements.

32. A second information processing apparatus, comprising:

a receiving module, configured to receive first information transmitted by a first device,
wherein the first information comprises at least one first coefficient, each first coefficient corresponds to one frequency domain tag, FDT, and the FDT indicates a frequency domain distance between a pair of resource elements, and
wherein the first information is determined by the first device through receiving a first reference signal, and the first reference signal occupies at least two resource elements.

33. A communication device, comprising:

one or more processors;
wherein the one or more processors are configured to call computer instructions to cause the communication device to perform the information processing method according to any one of claims 1-13 or claims 14-29.

34. A communication system, comprising a first device and a network device, wherein the first device is configured to implement the information processing method according to any one of claims 1-13, and the network device is configured to implement the information processing method according to any one of claims 14-29.

35. A storage medium, having instructions stored, wherein the instructions, when executed on a communication device, cause the communication device to perform the information processing method according to any one of claims 1-13 or claims 14-29.

Communication System 100

| | |
|---|---|
| First Device 101 | Network Device 102 |

FIG. 1

| First Device 101 | Network Device 102 |
|---|---|

S2101, receive a first reference signal (e.g., a CSI-RS or a sensing reference signal)

S2102, determine first coefficient samples corresponding to a FDT

S2103, obtain first information by determining one or more first coefficients corresponding to one or more FDTs based on the first coefficient samples

S2104, transmit the first information (e.g., sensing information)

S2105, construct a first matrix according to the first information

S2106, obtain a first standard orthonormal basis and/or a second standard orthonormal basis according to the first matrix

S2107, obtain sensing metrics by performing a spectrum estimation based on the first standard orthonormal basis and/or the second standard orthonormal basis

S2108, determine the state information of the downlink channel according to the first information

S2109, transmit second information

S2110, determine sensing metrics according to the second information and/or the first information

S2111, determine the state information of the downlink channel according to the second information and/or the first information

FIG. 2a

y

FIG. 2b

S3101, acquire a first reference signal

S3102, determine first coefficient samples corresponding to a FDT

S3103, obtain first information by determining one or more first coefficients corresponding to one or more FDTs based on the first coefficient samples

S3104, transmit the first information

S3105, transmit second information

FIG. 3a

S3201, acquire a first reference signal

S3202, determine first information

S3203, transmit the first information

FIG. 3b

S3301, acquire a first reference signal

↓

S3302, transmit first information

FIG. 3c

S4101, acquire first information

↓

S4102, construct a first matrix according to the first information

↓

S4103, obtain a first standard orthonormal basis and/or a second standard orthonormal basis according to the first matrix

↓

S4104, obtain sensing metrics by performing a spectrum estimation based on the first standard orthonormal basis and/or the second standard orthonormal basis

↓

S4105, determine state information of a downlink channel according to the first information

↓

S4106, receive second information

↓

S4107, determine sensing metrics according to the second information and/or the first information

↓

S4108, determine state information of the downlink channel according to the second information and/or the first information

FIG. 4a

S4201, acquire first information

S4202, construct a first matrix according to the first information

S4203, estimate sensing metrics according to the first matrix

FIG. 4b

S4301, acquire first information

S4302, estimate sensing metrics according to the first information

FIG. 4c

S4401, acquire first information

S4402, determine state information of a downlink channel according to the first information

FIG. 4d

S4501, acquire first information

FIG. 4e

```
┌──────────────────────┐                    ┌──────────────────────┐
│     Receiver 101      │                    │  Network Device 102   │
└──────────────────────┘                    └──────────────────────┘
            │                                            │
            │                                            │
┌──────────────────────┐                                │
│  S5101, receive a first│                               │
│   reference signal     │                               │
└──────────────────────┘                                │
            │                                            │
            │   S5102, transmit first information        │
            │───────────────────────────────────────────▶
            │                                            │
            │                                            │
```

FIG. 5

┌─────────────────────────────────────────────────────────────┐
│  S6101, the sensing receiver reports a normalized correlation │
│  coefficient corresponding to each FDT to the network device  │
└─────────────────────────────────────────────────────────────┘
                              │
                              ▼
┌─────────────────────────────────────────────────────────────┐
│  S6102, the network device calculates and estimates the       │
│  sensing metrics according to the normalized correlation      │
│  coefficient corresponding to each FDT reported by the        │
│  sensing receiver                                             │
└─────────────────────────────────────────────────────────────┘

FIG. 6

┌───────────────────────────────────────────────────┐
│  First Information Processing Apparatus 7100         │
│                                                     │
│        ┌─────────────────────────────────┐          │
│        │     Receiving Module 7101        │          │
│        └─────────────────────────────────┘          │
│                        │                            │
│        ┌─────────────────────────────────┐          │
│        │    Transmitting Module 7102      │          │
│        └─────────────────────────────────┘          │
│                                                     │
└───────────────────────────────────────────────────┘

FIG. 7a

Second Information Processing Apparatus 7200

Receiving Module 7201

FIG. 7b

**8100**

8101 — Processor

Transceiver — 8103

8102 — Memory

FIG. 8a

**8200**

8201 — Processor

8202 — Memory

Interface — 8203

FIG. 8b

## INTERNATIONAL SEARCH REPORT

| International application No. |
|---|
| **PCT/CN2023/095401** |

**A. CLASSIFICATION OF SUBJECT MATTER**

H04W72/0446(2023.01)i

According to International Patent Classification (IPC) or to both national classification and IPC

**B. FIELDS SEARCHED**

Minimum documentation searched (classification system followed by classification symbols)

IPC: H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 参考信号, 信道状态信息, 感知, 系数, 频域, 距离, 间隔, 资源元素, 集合, RS, CSI, sensing, coefficient, frequency, domain, distance, interval, resource, element, RE, resource, set

**C. DOCUMENTS CONSIDERED TO BE RELEVANT**

| Category* | Citation of document, with indication, where appropriate, of the relevant passages | Relevant to claim No. |
|---|---|---|
| Y | CN 115118402 A (HUAWEI TECHNOLOGIES CO., LTD.) 27 September 2022 (2022-09-27) description, paragraphs 55-173, and figures 1-7 | 1-4, 7-9, 14-17, 20-23, 30-35 |
| Y | CN 109874134 A (CHONGQING GUGENG TECHNOLOGY CO., LTD.) 11 June 2019 (2019-06-11) description, paragraphs 25-43 | 1-4, 7-9, 14-17, 20-23, 30-35 |
| E | CN 116848924 A (BEIJING XIAOMI MOBILE SOFTWARE CO., LTD.) 03 October 2023 (2023-10-03) description, paragraphs 44-428, and claims 1-30 | 1-3, 9-16, 22-35 |
| A | CN 110636617 A (HUAWEI TECHNOLOGIES CO., LTD.) 31 December 2019 (2019-12-31) entire document | 1-35 |
| A | WO 2023011185 A1 (HUAWEI TECHNOLOGIES CO., LTD.) 09 February 2023 (2023-02-09) entire document | 1-35 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 November 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095401**

| Patent document cited in search report | | | Publication date (day/month/year) | Patent family member(s) | | | Publication date (day/month/year) |
|---|---|---|---|---|---|---|---|
| CN | 115118402 | A | 27 September 2022 | None | | | |
| CN | 109874134 | A | 11 June 2019 | None | | | |
| CN | 116848924 | A | 03 October 2023 | None | | | |
| CN | 110636617 | A | 31 December 2019 | US | 2021105783 | A1 | 08 April 2021 |
| | | | | WO | 2019242511 | A1 | 26 December 2019 |
| | | | | EP | 3799496 | A1 | 31 March 2021 |
| | | | | EP | 3799496 | A4 | 11 August 2021 |
| WO | 2023011185 | A1 | 09 February 2023 | None | | | |

Form PCT/ISA/210 (patent family annex) (July 2022)